# EUROPEAN PATENT APPLICATION

(11) **EP 4 203 537 A1**
(43) Date of publication of application: **28.06.2023**
(21) Application number: 21864116.5
(22) Date of filing: 19.08.2021
(51) Int. Cl.: H04W 16/14, H04W 92/20, H04W 84/12

(54) **WIRELESS COMMUNICATION DEVICE, AND WIRELESS COMMUNICATION TERMINAL**

(30) Priority: 02.09.2020 JP 2020147650
(71) Applicant: Sony Group Corporation, Minato-Ku, Tokyo, 108-0075 (JP)
(72) Inventor: AIO Kosuke, Tokyo 108-0075 (JP); SAKODA Kazuyuki, Tokyo 108-0075 (JP); UCHIYAMA Hiromasa, Tokyo 108-0075 (JP); TANAKA Yusuke, Tokyo 108-0075 (JP); HIRATA Ryuichi, Tokyo 108-0075 (JP); TANAKA Ken, Tokyo 108-0075 (JP); HANDTE Thomas, 70327 Stuttgart (DE); CIOCHINA Dana, 70327 Stuttgart (DE); ABOUELSEOUD Mohamed, New York, New York 10010 (US); XIN Liangxiao, New York, New York 10010 (US); XIA Qing, New York, New York 10010 (US)
(74) Representative: D Young & Co LLP
(86) International application number: PCT/JP2021/030287
(87) International publication number: WO 2022/050058

(57) **Abstract**

The present technology relates to a wireless communication device and a wireless communication terminal that make it possible to reduce a transmission delay of data.

The wireless communication device transmits a first data frame including a first data signal to a wireless terminal, and controls transmission of a suppression request signal requesting another wireless communication device to perform interference suppression on the wireless terminal before transmitting the first data frame. The present technology can be applied to a wireless communication system.

## Description

### TECHNICAL FIELD

The present technology relates to a wireless communication device and a wireless communication terminal, and more particularly to a wireless communication device and a wireless communication terminal capable of reducing a transmission delay of data.

### BACKGROUND ART

In recent years, various use cases using wireless communication, such as real-time mobile gaming using a technology such as virtual reality (VR)/augmented reality (AR), process management and robot operation in a factory and drone control have been studied. In achieving these use cases, "low delay transmission technology" that transmits important information such as control information within a certain delay time is emphasized.

Among low delay transmission technologies in an environment where a plurality of wireless LAN base stations (hereinafter, referred to as AP) exists, a technique called Coordinate Beamforming (CBF) has been studied as a method by which frequency resources can be used most efficiently. The CBF is a technique in which, while transmitting data to a subordinate wireless LAN device (hereinafter, referred to as an STA) belonging to the same cell, a certain AP performs a coordinated operation so as to reduce interference power given to the aforementioned STA by another AP. The CBF enables a plurality of APs to simultaneously transmit using the same frequency resources and meanwhile the STA side to receive transmission signals and acquire transmission data.

As a method of reducing interference, a method of spatially generating NULL to a wireless local area network (LAN) device not subordinate to the AP using a multi input multi output (MIMO) technique is generally known (see Patent Document 1). Note that, in general, spatially generating NULL means spatially setting the interference to zero.

For example, from the viewpoint of an AP holding a data packet (hereinafter, a real time application (RTA) packet) requiring the low delay transmission technology, it is desirable that another AP always suppress interference with the STA to which the AP itself transmits the RTA packet.

### CITATION LIST

### PATENT DOCUMENT

Patent Document 1: WO 2010/125635 A

### SUMMARY OF THE INVENTION

### PROBLEMS TO BE SOLVED BY THE INVENTION

However, in another AP, performing interference suppression on the STA that is not subordinate to the AP leads to sacrificing communication quality of the AP itself. For example, in a case where MIMO is used to generate NULL, some of its own transmission antennas must be used to generate NULL for the STA not subordinate to the AP, and the number of transmission antennas that can be used for its own communication decreases, leading to a decrease in the data rate.

Therefore, in the AP that performs the interference suppression, it is desirable to perform the interference suppression on the STA not subordinate to the AP only in a really necessary situation.

The present technology has been made in view of such a situation, and makes it possible to reduce a transmission delay of data.

### SOLUTIONS TO PROBLEMS

A wireless communication device according to a first aspect of the present technology includes a wireless communication unit that transmits a first data frame including a first data signal to a wireless terminal, a communication control unit that controls transmission of a suppression request signal requesting another wireless communication device to perform interference suppression on the wireless terminal before transmission of the first data frame.

A wireless communication device according to a second aspect of the present technology includes a wireless communication unit that receives a suppression request signal requesting interference suppression on the first wireless terminal, the suppression request signal being transmitted before transmission of a first data frame from another wireless communication device that transmits the first data frame including a first data signal to a first wireless terminal, and a communication control unit that determines whether or not to perform the interference suppression on the basis of the suppression request signal.

A wireless communication terminal according to a third aspect of the present technology includes a wireless communication unit that transmits a data frame including a data signal to a first wireless communication device, and a communication control unit that controls transmission of a suppression request signal requesting a second wireless communication device to perform interference suppression before transmission of the data frame.

A wireless communication device according to a fourth aspect of the present technology includes a wireless communication unit that receives an interference request signal requesting interference suppression from a first wireless communication terminal that transmits a first data frame including a first data signal, and a communication control unit that determines whether or not to perform the interference suppression to another wireless communication device to which the first data frame is transmitted by the first wireless communication terminal on the basis of the interference request signal when a second data frame different from the first data frame is transmitted to a second wireless communication terminal.

A wireless communication terminal according to a fifth aspect of the present technology includes a communication unit that receives, from a wireless communication device, a coordination information sharing signal that shares a request for interference suppression on another wireless communication terminal that transmits a first data frame including a first data signal, and a communication control unit that determines whether or not to perform the interference suppression on another wireless communication device to which the another wireless communication terminal transmits the first data frame on the basis of the coordination information sharing signal when a second data frame different from the first data frame is transmitted to the wireless communication device.

In the first aspect of the present technology, the first data frame including the first data signal is transmitted to the wireless terminal. Then, before transmission of the first data frame, transmission of the suppression request signal requesting the another wireless communication device to perform interference suppression on the wireless terminal is controlled.

In the second aspect of the present technology, the suppression request signal requesting the interference suppression on the first wireless terminal that has been transmitted from the another wireless communication device, which transmits the first data frame including the first data signal to the first wireless terminal, before the transmission of the first data frame is received by the wireless communication device. Then, it is determined whether or not to perform the interference suppression on the basis of the suppression request signal.

In the third aspect of the present technology, a data frame including a data signal is transmitted to the first wireless communication device. Then, before the data frame is transmitted, transmission of the suppression request signal requesting the second wireless communication device to perform the interference suppression is controlled.

In the fourth aspect of the present technology, the interference request signal requesting interference suppression is received from a first wireless communication terminal that transmits a first data frame including a first data signal, and whether or not to perform the interference suppression to another wireless communication device to which the first data frame is transmitted by the first wireless communication terminal is determined on the basis of the interference request signal when a second data frame different from the first data frame is transmitted to a second wireless communication terminal.

In the fifth aspect of the present technology, the coordination information sharing signal that shares a request for the interference suppression with the another wireless communication terminal that transmits the first data frame including the first data signal is received from the wireless communication device. Then, at the time of transmission of the second data frame different from the first data frame to the wireless communication device, whether or not to perform the interference suppression on the another wireless communication device to which the another wireless communication terminal transmits the first data frame is determined on the basis of the coordination information sharing signal.

### BRIEF DESCRIPTION OF DRAWINGS

Fig. 1 is a diagram illustrating a configuration example of a wireless communication system of the present technology.
Fig. 2 is a diagram illustrating a sequence for describing overall processing of the wireless communication system in a first embodiment.
Fig. 3 is a diagram illustrating a configuration example of a Coordination Request Frame.
Fig. 4 is a diagram illustrating a configuration example of a Coordination Response Frame.
Fig. 5 is a diagram illustrating a configuration example of a Preamble included in a data frame.
Fig. 6 is a diagram illustrating a configuration example of a Coordination End Frame.
Fig. 7 is a diagram illustrating a first example of a data sequence of a Data Tx Phase in the first embodiment.
Fig. 8 is a diagram illustrating a second example of a data sequence of the Data Tx Phase in the first embodiment.
Fig. 9 is a diagram illustrating a third example of a data sequence of the Data Tx Phase in the first embodiment.
Fig. 10 is a diagram illustrating a fourth example of a data sequence of the Data Tx Phase in the first embodiment.
Fig. 11 is a diagram illustrating a fifth example of a data sequence of the Data Tx Phase in the first embodiment.
Fig. 12 is a block diagram illustrating a configuration example of a wireless communication device.
Fig. 13 is a flowchart illustrating processing in the first embodiment of an AP 1.
Fig. 14 is a flowchart illustrating processing in the first embodiment of the AP 2.
Fig. 15 is a diagram illustrating a sequence for describing overall processing of a wireless communication system in a second embodiment.
Fig. 16 is a diagram illustrating a first example of a data sequence of a Data Tx Phase in the second embodiment.
Fig. 17 is a diagram illustrating a second example of a data sequence of the Data Tx Phase in the second embodiment.
Fig. 18 is a diagram illustrating a third example of a data sequence of the Data Tx Phase in the second embodiment.
Fig. 19 is a diagram illustrating a fourth example of a data sequence of the Data Tx Phase in the second embodiment.
Fig. 20 is a flowchart illustrating processing in the second embodiment of the AP 2.
Fig. 21 is a flowchart illustrating processing in the second embodiment of the AP 1.
Fig. 22 is a diagram illustrating a sequence for describing overall processing of a wireless communication system in a third embodiment.
Fig. 23 is a diagram illustrating a configuration example of Coordination Info Sharing Frame.
Fig. 24 is a block diagram illustrating a configuration example of a computer.

### MODE FOR CARRYING OUT THE INVENTION

Hereinafter, modes for carrying out the present technology will be described. The description will be made in the following order.
1. System configuration
2. First embodiment (example in which AP 1 first attains transmission right)
3. Second embodiment (example in which AP 2 first attains transmission right)
4. Third embodiment (example of transmission from STA to AP)
5. Others

### <1. System configuration>

### <Configuration example of wireless communication system>

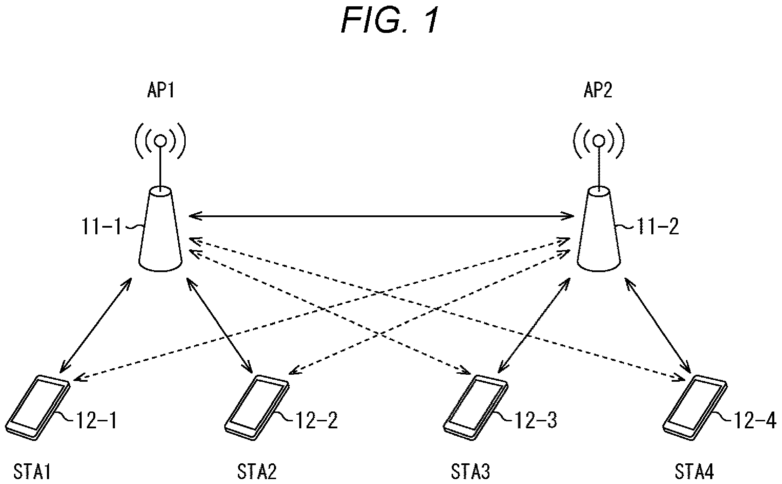

Fig. 1 is a diagram illustrating a configuration example of a wireless communication system according to an embodiment of the present technology.

In Fig. 1, a solid arrow indicates that devices are connected to each other, and a broken arrow indicates that power is exchanged between devices. An access point (AP) represents a base station of a wireless local area network (LAN). A station (STA) represents a wireless communication terminal.

The wireless communication system of Fig. 1 is configured by connecting an AP 1 and an AP 2 by wired communication or wireless communication. A wireless communication device 11-1 and a wireless communication device 11-2 are devices that operate as the AP 1 and the AP 2, respectively. Furthermore, the wireless communication system is configured such that an STA 1 and an STA 2 are connected to the AP 1 by wireless communication, and the STA 3 and STA 4 are connected to the AP 2 by wireless communication. A wireless communication terminal 12-1 to a wireless communication terminal 12-4 are devices that operate as the STA 1 to STA 4, respectively.

The STA 1 and STA 2 connected to the AP 1 by wireless communication belong to the same cell (BSS) as the AP 1, and are referred to as STAs subordinate to the AP 1. The STA 3 and STA 4 connected to the AP 2 by wireless communication belong to the same cell (BSS) and are referred to as STAs subordinate to the AP 2.

Since the STA 2 and STA 3 are close to APs other than the connection destination, the STA 2 and STA 3 are assumed to receive reception power from the APs other than the connection destination more strongly than the STA 1 and STA 4 that are far from the APs other than the connection destination.

Note that the target system configuration is not limited to the example of Fig. 1, and any configuration may be used as long as there is a plurality of APs for which connection is established and STAs are connected to the respective APs as peripheral terminals.

In the present technology, in a case where a plurality of APs transmits a real time application (RTA) packet, an AP controls transmission of a suppression request signal that is a signal requesting another AP to perform interference suppression on the STA as the transmission destination of the RTA packet.

The RTA packet is a data packet that requires at least one of low latency or high reliability.

Hereinafter, an example in which the AP 1 requests the AP 2 to perform a coordinated operation for performing the interference suppression on the assumption that the AP 1 transmits the RTA packet to the STA 2 will be described.

Note that, in the present specification, a minimum unit of data transmitted by the AP is referred to as a "packet", and data obtained by joining a plurality of packets and adding a MAC Header and a Preamble is referred to as a "data frame". The transmission of a data frame is referred to as "data transmission". The name is not limited thereto.

Furthermore, in the present specification, the interference suppression is referred to as "generating NULL", which does not indicate only spatial zero interference, but also means an operation of lowering interference power by lowering a transmission power value or applying beamforming (hereinafter, referred to as beam control).

### <2. First embodiment (example in which AP 1 first attains transmission right)>

First, as a first embodiment, an example in which the AP 1 first attains the transmission right will be described.

### <Example of overall processing sequence>

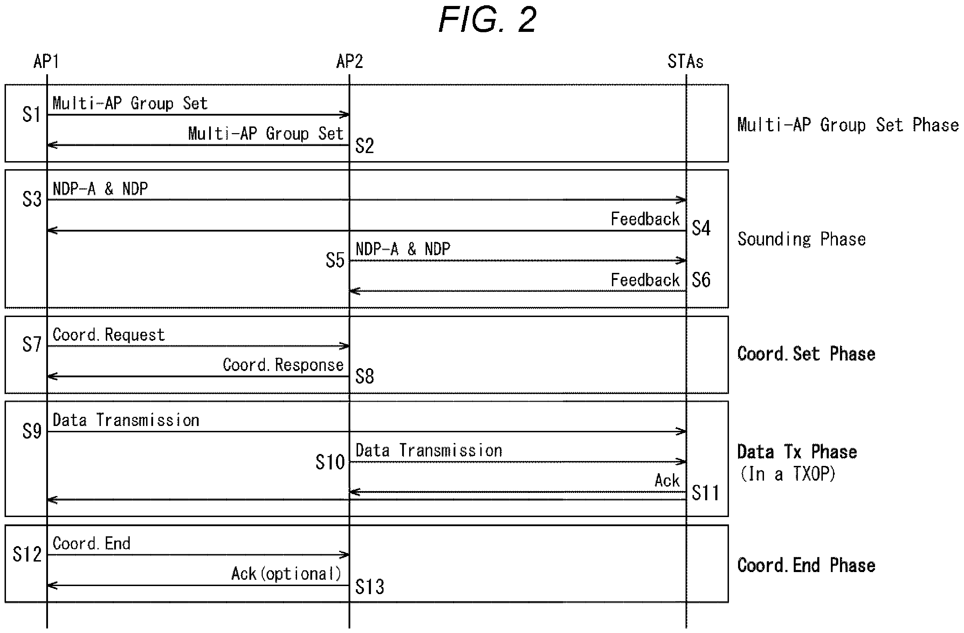

Fig. 2 is a diagram illustrating a sequence for describing overall processing of the wireless communication system in the first embodiment.

Note that the processing illustrated in Fig. 2 is processing performed by the AP 1, the AP 2, and STAs. The STAs represents STA 1 to STA 4.

The processing of the wireless communication system is divided into five phases of a Multi-AP Group Set Phase, a Sounding Phase, a Coordination Set Phase, a Data Tx Phase, and a Coordination End Phase. Note that, in Fig. 2, Coordination is appropriately abbreviated as Coord. The same applies to the following drawings.

Steps S1 and S2 are Multi-AP Group Set Phases in which information is exchanged between APs. In step S1, the AP 1 performs Multi-AP Group Set on the AP 2. In step S2, the AP 2 performs Multi-AP Group Set on the AP 1.

In the Multi-AP Group Set Phase, the AP 1 and the AP 2 perform Multi AP Group Set with each other, thereby exchanging information such as whether or not the APs can coordinate with each other, information of the number of transmission antennas, Capability information indicating capability in a coordination method, maximum STA information capable of generating NULL at the same time, and an identifier (Association ID (AID)) of subordinate STAs.

Steps S3 to S6 are Sounding Phases in which information is exchanged between the AP and the STA. In step S3, the AP 1 transmits, to the STAs, an NDP (NULL DATA PACKET) Frame which is a reference signal of a known pattern, an NDP-A (Announcement) Frame which is a signal for announcing the NDP, and the like. In step S4, the STAs having received the NDP Frame or the NDP-A Frame transmits a Feedback Frame, which is a feedback signal, to the AP 1. In step S5, the AP 2 transmits the NDP-A Frame, the NDP Frame, and the like to the STAs. In step S6, the STAs transmit the Feedback Frame to the AP 2.

That is, in the Sounding Phase, the AP 1 and the AP 2 transmit the NDP-A Frame and the NDP Frame and obtain the Feedback Frame from the STAs that have received the NDP-A Frame and the NDP Frame, and information is exchanged between the AP and the STAs. Thus, channel information between the AP and the STAs is estimated, and transmission weight information to be applied by the AP is acquired.

In the Sounding Phase, basically, a Frame (NDP-A, ANP, Beam Forming Report Protocol (BFRP) Trigger, or Feedback) used in IEEE 802.11ax and a sequence thereof are assumed. The BFRP Trigger Frame is a trigger signal for advertising the beam control. However, a difference between the present technology and IEEE 802.11ax is that the AP 1 and the AP 2 acquire Feedback from the STAs belonging to other cells and acquire information of interference power.

Steps S7 and S8 are the Coordination Set Phase. In the Coordination Set Phase, the coordinated operation between the AP 1 and the AP 2, that is, setup at the time of starting interference suppression on the STA of another cell is performed.

For example, in a case where a certain STA (in the case of Fig. 2, the STA 2) starts an application that requires the RTA packet, in step S7, the AP 1 transmits a Coordination Request Frame, which is the suppression request signal requesting the interference suppression on the STA 2, to the AP 2. Upon receiving the Coordination Request Frame, the AP 2 determines whether or not to start the interference suppression on the STA 2 on the basis of information in the frame, and returns a Coordination Response Frame, which is a response signal to the Coordination Request Frame, to the AP 1 on the basis of the determination result in step S8.

Steps S9 to S11 are the Data Tx Phase. In the Data Tx Phase, each of the AP 1 and the AP 2 transmits data to the respective STAs subordinate to the AP 1 and the AP 2.

For example, in step S9, the AP 1 performs Data Transmission to the STA 2. In step S10, the AP 2 performs Data Transmission to the STA 3. In step S11, the STA 2 transmits an Ack to the AP 1, and the STA 3 transmits an Ack to the AP 2.

Although details will be described later, it is assumed that one Data Tx Phase operates within a period in which a Transmit Opportunity (TXOP), which is one transmission right, is allocated (hereinafter, referred to as within TXOP). The Data Transmission may be performed a plurality of times within the same TXOP.

Steps S12 and S13 are a Coordination End Phase. In the Coordination End Phase, a process of ending the coordinated operation between the AP 1 and the AP 2, that is, the interference suppression to the STA of another cell is performed.

That is, in step S12, the AP 1 transmits a Coordination End Frame, which is a signal for ending the interference suppression, to the AP 2. In step S13, the AP 2 transmits the Ack to the AP 1. Note that the transmission of the Ack is optional.

As a timing at which the AP 1 transmits the Coordination End Frame, for example, a case where the STA 2 terminates an application that requires the RTA packet, a case where the AP 1 completes transmission of all RTA packets, or the like is considered.

Note that the above-described five phases are examples, and the configuration example is not limited thereto. For example, the Coordination Set Phase may be included in the Data Tx Phase (that is, performed every time the TXOP is attained) or may be included in the Sounding Phase.

The Coordination End Phase may be included in the Data Tx Phase. In this case, the Coordination End Phase is performed immediately before the end of the TXOP. The Data Tx Phase may be performed a plurality of times between a Coordination Setup Phase and the Coordination End Phase.

### <Configuration example of Coordination Request Frame>

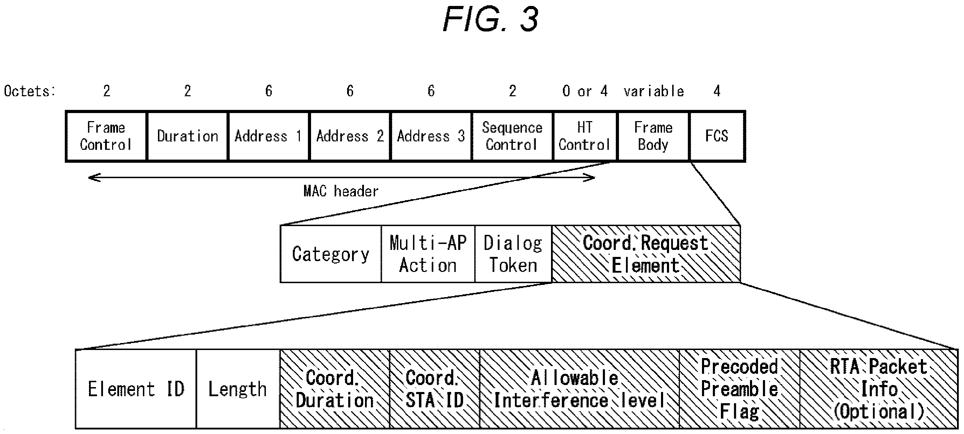

Fig. 3 is a diagram illustrating a configuration example of the Coordination Request Frame.

The Coordination Request Frame includes a MAC header, a Frame Body, and a Frame Check Sequence (FCS). Note that hatching in Fig. 3 indicates a field including information that is characteristic in the present technology. The same applies to the following drawings.

The MAC header includes fields of Frame Control, Duration, Address1 to Address3, Sequence Control, and HT Control.

The Frame Body includes fields of Category, Multi-AP Action, Dialog Token, and Coordination Request Element.

In the Category field, a value indicating that this frame is an Action Frame for Multi-AP is set.

In the Multi-AP Action field, a value indicating that this frame is the Coordination Request Frame is set.

In the Dialog Token field, in a case where a plurality of Action requests occurs simultaneously, the same value is stored in this Request and in a response signal to this Request in order to confirm which response signal is for this Request.

The Coordination Request Element field includes information regarding STA to be subjected to the interference suppression. Note that this Element may include only information regarding one STA or may include information regarding a plurality of STAs. In addition, a plurality of Coordination Request Elements may be included in the frame.

The Coordination Request Element field includes fields of Element ID, Length, Coordination Duration, Coordination STA ID, Allowable Interference level, Precoded Preamble Flag, and RTA Packet Info.

In the Element ID field, identification information indicating that this frame is the Coordination Request Frame is set.

In the Length field, information regarding the length of this frame is set.

In the Coordination Duration field, information regarding a time for requesting another AP to perform the interference suppression (for example, period information, start/end time (timing), or the like) is set. That is, the time for requesting another AP to perform the interference suppression is also the time related to transmission of RTA data. By setting a value such as "0" to this field, it is not necessary to set a specific time. In addition, a limit value of the Duration may be defined in the standard.

In the Coordination STA ID field, identification information (for example, AID) of an STA to be subjected to the interference suppression is set. As the identification information, an identifier exchanged in Multi-AP Group Set Phase is used.

In the Allowable Interference level field, information of allowable interference power which is allowable interference power in the STA indicated by the Coordination STA ID field is set. The information of the allowable interference power is indicated by an integer of a binary number in dBm. The AP 2 determines whether or not to implement the interference suppression and a method on the basis of the value of this field.

In the Precoded Preamble Flag field, flag information indicating whether or not to request start of the beam control from the Preamble that is the head of the frame is set if the AP 2 performs the interference suppression to the STAs of other cells by the beam control using multi input multi output (MIMO). If the start of the beam control from the Preamble is requested, "1" is set. If the Preamble may be radiated in all directions, and the beam control may be performed after the Preamble, "0" is set.

In the RTA Packet Info field, information (for example, Interval, Length, Modulation Coding Scheme (MCS), and the like) regarding the RTA packet that the AP 1 wants to transmit is set. This field may be omitted depending on the situation.

Note that, in Fig. 3, the Coordination Request Frame is configured as a part of the Action Frame defined in IEEE 802.11, but the configuration example of the frame is not limited to the example in Fig. 3. For example, it may be configured as a part of a Management Frame or a Control Frame including a field equivalent to the information specified by the Coordination Request Element or this Element.

### <Configuration example of Coordination Response Frame>

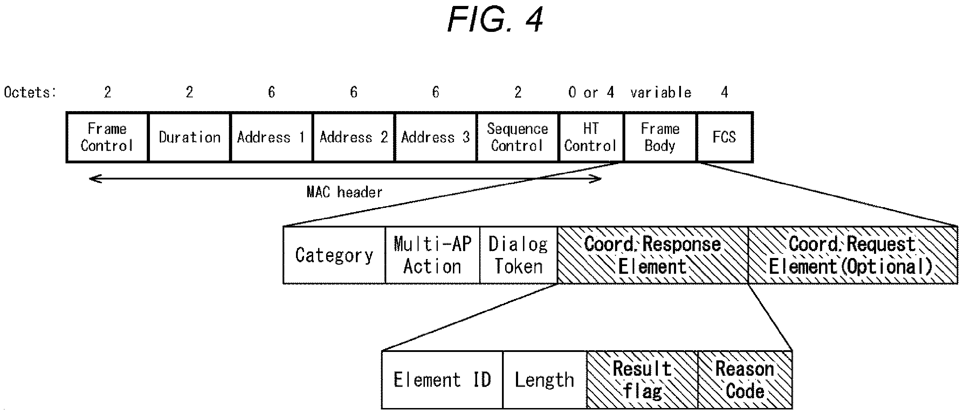

Fig. 4 is a diagram illustrating a configuration example of the Coordination Response Frame.

The Coordination Response Frame includes the MAC header, the Frame Body, and the FCS.

The Frame Body includes fields of Category, Multi-AP Action, Dialog Token, Coordination Response Element, and Coordination Request Element.

In the Category field, a value indicating that this frame is the Action Frame for Multi-AP is set.

In the Multi-AP Action field, a value indicating that this frame is the Coordination Response Frame is set.

In the Dialog Token field, the same value as the Dialog Token of the Coordination Request Frame to be returned in this frame is set.

In the Coordination Response Element field, information indicating a response to the received Coordination Request Frame is set.

The Coordination Response Element field includes fields of Element ID, Length, Result flag, and Reason Code.

In the Element ID field, identification information indicating that this frame is the Coordination Response Frame is set.

In the Length field, information regarding the length of this frame is set.

In the Result flag field, "1" is set in a case where the request for the interference suppression is accepted, and "0" is set in a case where the request for the interference suppression is rejected.

If "0" is set in the Result flag field, a value indicating a reason for rejecting the request is set in the Reason Code field. A table standardized by IEEE 802.11 is used as a table for associating a value set in a field with a reason thereof. Furthermore, in a case where "1" is set in the Result flag field, "0 (Successful)" is set in this field.

Note that, in a case where a request for the interference suppression is made to a plurality of STAs in the Coordination Request Element in the Coordination Request Frame, this frame may include a plurality of Coordination Response Elements. Alternatively, the Reason flag/Reason Code in the Coordination Response Element may be included in the same Element by the requested STA.

Furthermore, similarly to the AP 1, if there is an STA that requests the interference suppression, the AP 2 may add the above-described Coordination Request Element to this frame and transmit the frame. In this case, the AP 1 needs to return a response signal including the Coordination Response Element to the AP 2.

Note that, in Fig. 4, the Coordination Response Frame is configured as a part of the Action Frame defined in IEEE 802.11, but the configuration example of the frame is not limited to the example in Fig. 4. For example, it may be configured as a part of the Management Frame or the Control Frame including a field equivalent to the information specified by the Coordination Response Element or this Element.

### <Configuration example of Preamble included in data frame>

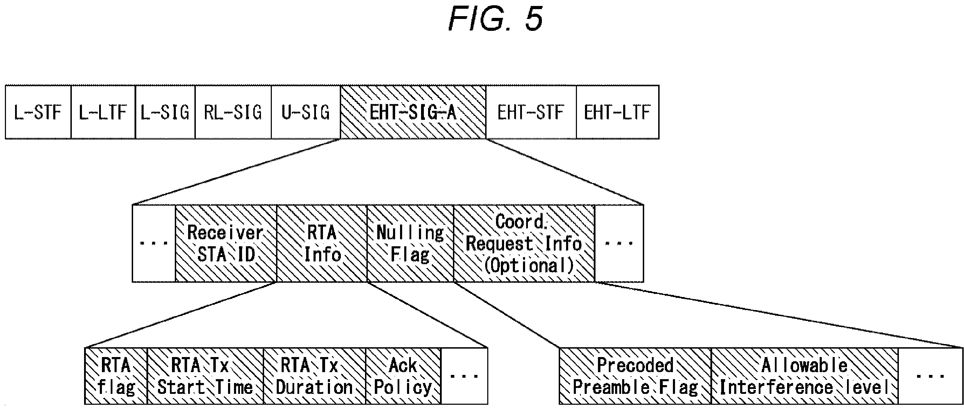

Fig. 5 is a diagram illustrating a configuration example of a Preamble included in a data frame transmitted by AP 1/AP 2.

The Preamble included in the data frame includes fields of L-STF, L-LTF, L-SIG, RL-SIG, U-SIG, EHT-SIG-A, EHT-STF, and EHT-LTF.

In Fig. 5, the field of EHT-SIG-A includes at least fields of Receiver STA ID, RTA Info, Nulling Flag, and Coordination Request Info. Note that these pieces of information are not limited to being included in the EHT-SIG-A, and may be included in any of the Preambles. Alternatively, equivalent information may be included in the Control field in the MAC header.

In the Receiver STA ID field, identification information of the STA as the transmission destination is set. As the identification information, an identifier exchanged in the Multi-AP Group Set Phase is used.

In the RTA Info field, information regarding the RTA packet is set. The RTA Info includes subfields such as a flag (RTA flag) indicating whether or not an RTA packet is included in data transmission of the AP 1, a time (RTA Tx Start Time) at which transmission of the RTA packet starts, a transmission duration (RTA Tx Duration) of the RTA packet, and an Ack Policy related to the RTA packet.

Note that the Start time and the Duration are information regarding the transmission time of the RTA packet. The information regarding the transmission time of the RTA packet is not limited to the Start time and the Duration, and for example, a time (RTA Tx End Time) at which the transmission of the RTA packet ends may be set, or a number of a packet that is the RTA packet among the aggregated (concatenated) packets may be designated instead of the information of the time.

Furthermore, in a case where the Ack Policy of the RTA packet is uniquely defined by the standard, notification of the Ack Policy subfield may not be provided.

In the Nulling Flag field, a flag indicating whether or not the AP that transmits this data generates Null to the STA of another cell is set. If the Nulling Flag is "1", it means that the AP performs data transmission to the STA requested from another AP within the Coordination Set Phase in a state where Null is generated.

In the Coordination Request Info, a part of information (for example, the Precoded Preamble flag, the Allowable Interference level, or the like) included in the Coordination Request Frame described above with reference to Fig. 3 is set.

Normally, since the same value as the value notification of which is provided in the Coordination Request Frame is set in the Coordination Request Info, the Coordination Request Info may not be included in the Preamble. However, notification of equivalent information may be provided in the Preamble, for example, in a case where pre-negotiation such as the Coordination Request Frame is not performed, or in a case where information notification of which is to be provided in the Coordination Request Frame changes frequently, or the like.

### <Configuration example of Coordination End Frame>

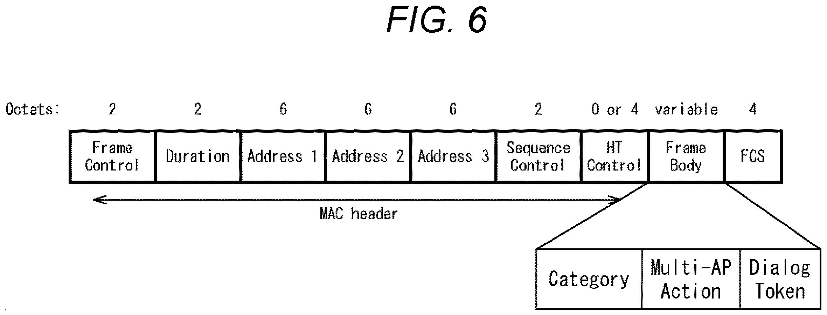

Fig. 6 is a diagram illustrating a configuration example of a Coordination End Frame.

The Coordination End Frame includes the MAC header, the Frame Body, and the FCS.

The Frame Body includes fields of Category, Multi-AP Action, and Dialog Token.

In the Category field, a value indicating that this frame is the Action Frame for Multi-AP is set.

In the Multi-AP Action field, a value indicating that this frame is the Coordination End Frame is set.

In the Dialog Token field, the same value as the Dialog Token of the Coordination Request Frame processed in this frame is set.

Note that, in Fig. 6, the Coordination End Frame is configured as a part of the Action Frame defined in IEEE 802.11, but the configuration example of the frame is not limited to the example in Fig. 6.

### <First example of data sequence>

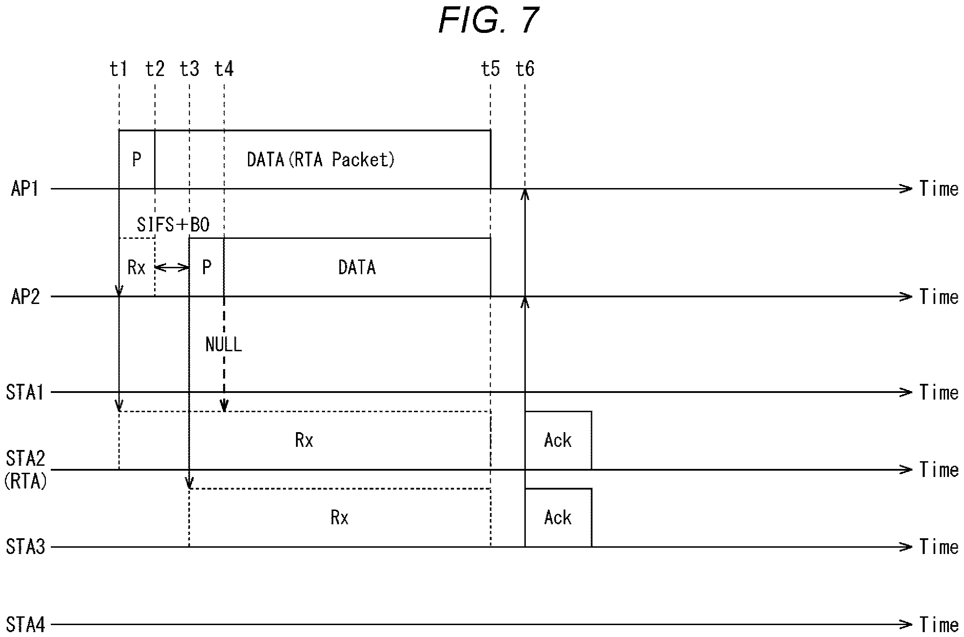

Fig. 7 is a diagram illustrating a first example of a data sequence of the Data Tx Phase in the first embodiment.

Fig. 7 illustrates an example in which the AP 1 transmits a data signal including the RTA packet to the STA 2, and the AP 2 generates Null to the STA 2 and transmits a data signal to the STA 3.

Note that, in Fig. 7, Rx represents reception of a data frame transmitted from another AP or STA. The same applies to the following drawings.

The AP 1 attains the TXOP by Back Off or the like, and starts transmitting the data frame including the data signal of the RTA packet to the STA 2 at time t1.

After receiving the Preamble in the data frame transmitted from the AP 1, the AP 2 acquires information regarding the AP 1 from the received Preamble at time t2. The information regarding the AP 1 includes that the AP 1 is performing data transmission to the STA 2 for which the interference suppression is requested from the AP 1 in the Coordination Set Phase, that data of the RTA packet is included in the data signal, and a transmission start time and a transmission period of the RTA packet, and the like. That is, Fig. 7 illustrates an example of a case where a Precoded Preamble to the AP 2 is not required. The Precoded Preamble represents the interference suppression from the Preamble, as described above.

At time t3 when a Short Interframe Space (SIFS) + Back Off (BO) time has elapsed from time t2, the AP 2 starts data transmission to the STA 3 on the basis of the acquired information regarding the AP 1. At time t4 after completion of transmission of the Preamble in the data frame, the AP 2 employs a method of generating Null for the STA 2 by transmission power control, for example, and starts data transmission after the Preamble for the STA 3.

At time t5, the AP 1 and the AP 2 end the data transmission.

At time t6, the STA 2 transmits the Ack that is a data response acknowledgement signal to the AP 1, and the STA 3 transmits the Ack to the AP 2.

Note that, in order to avoid the collision of Acks, the AP 2 needs to set the data transmission period in accordance with the end time (timing) of the data transmission of the AP 1. The end time of the data transmission of the AP 1 can be confirmed from Duration information included in the Preamble or the MAC header. If the data to be transmitted is insufficient, the AP 2 needs to align the end time of the data transmission with the AP 1 by providing padding bits or the like.

### <Second example of data sequence>

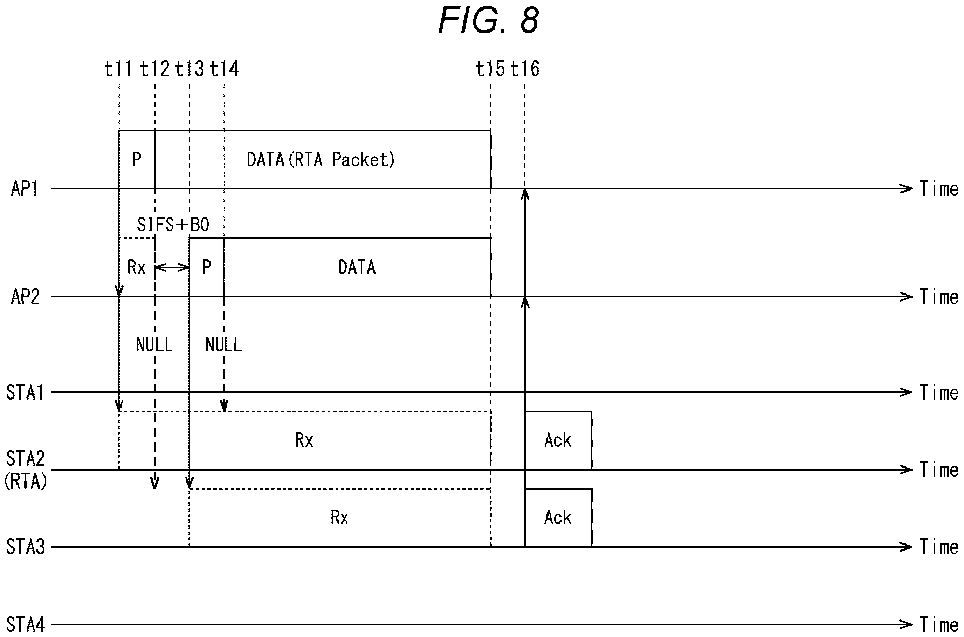

Fig. 8 is a diagram illustrating a second example of a data sequence of the Data Tx Phase in the first embodiment.

Fig. 8 illustrates an example in which the AP 1 also generates Null for the STA 3 like the AP 2 in Fig. 7 generates Null for the STA 2.

For example, whether or not the AP 1 generates Null is determined by whether or not the Coordination Request Element is included in the Coordination Response Frame transmitted from the AP 2 in the Coordination Set Phase. Furthermore, in this case, the AP 1 sets "1" in the Nulling Flag field in the Preamble/EHT-SIG-A and performs data transmission.

The AP 1 attains the TXOP, and at time t11, the AP 1 starts to transmit the data frame including the data signal of the RTA packet to the STA 2. At time t12 after completion of transmission of the Preamble in the data frame, the AP 1 employs a method of generating Null for the STA 3, and starts data transmission after the Preamble for the STA 2.

After receiving the Preamble transmitted from the AP 1, the AP 2 obtains information regarding the AP 1 from the received Preamble at time t12.

At time t13 when the time of SIFS + BO has elapsed from time t12, the AP 2 starts data transmission to the STA 3 on the basis of the acquired information regarding the AP 1. At time t14 after completion of transmission of the Preamble in the data frame, the AP 2 employs a method of generating Null for the STA 2 and starts data transmission after the Preamble for the STA 3.

At time t15, the AP 1 and the AP 2 end the data transmission.

At time t16, the STA 2 transmits the Ack to the AP 1, and the STA 3 transmits the Ack to the AP 2.

### <Third example of data sequence>

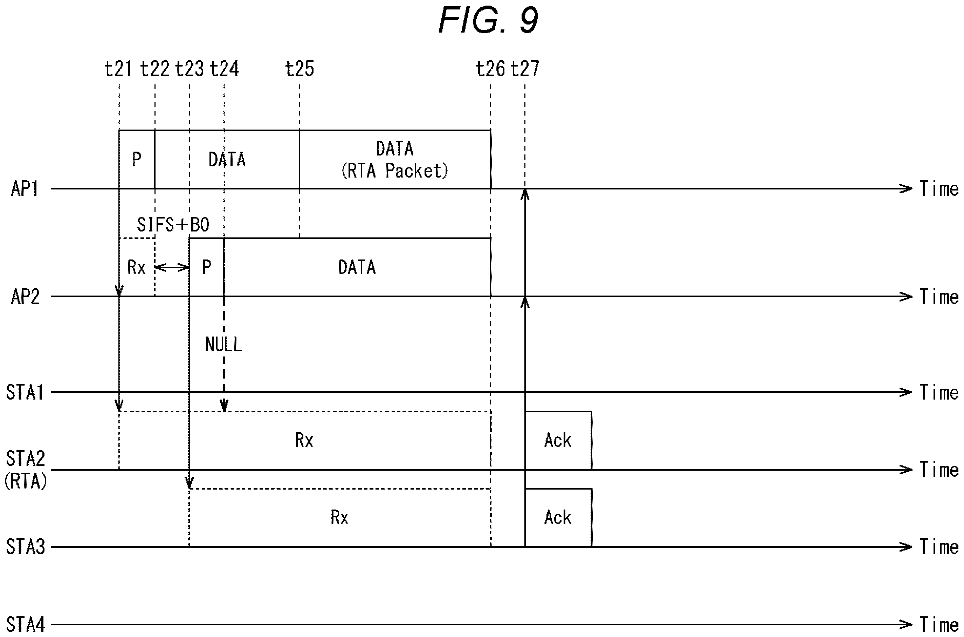

Fig. 9 is a diagram illustrating a third example of the data sequence of the Data Tx Phase in the first embodiment.

Fig. 9 illustrates an example in which the AP 1 transmits a data signal not including the RTA packet and a data signal including the RTA packet, and the AP 2 employs a method of generating Null for the STA 2 by the beam control from data transmission after the Preamble.

The AP 1 attains the TXOP and starts transmitting the data frame to the STA 2 at time t21. At time t22 after completing the transmission of the Preamble in the data frame, the AP 1 starts data transmission after the Preamble to the STA 2. Note that the AP 1 starts data transmission not including the RTA packet at time t22, and starts data transmission including the RTA packet at time t25.

After receiving the Preamble in the data frame transmitted from the AP 1, the AP 2 acquires information regarding the AP 1 from the received Preamble at time t22.

Moreover, in Fig. 9, since the AP 2 radiates the Preamble in all directions, only the Preamble transmitted by the AP 2 may cause a collision as a strong interference signal to the STA 2. Accordingly, the AP 2 confirms at which timing (timing of time t25) the RTA packet is transmitted from the RTA Info field of the Preamble/EHT-SIG-A transmitted from the AP 1.

If it is found that the AP 1 does not transmit the RTA packet during the transmission of its own Preamble, the AP 2 transmits the Preamble in all directions at time t23 when the time of SIFS + BO has elapsed from time t22. At time t24, the AP 2 controls the STA 2 to generate Null by the beam control from data transmission after Preamble.

Accordingly, at time t25 at which the data transmission including the RTA packet is started, control is performed such that null is generated for the STA 2 by the beam control.

At time t26, the AP 1 and the AP 2 end the data transmission.

At time t27, the STA 2 transmits the Ack to the AP 1, and the STA 3 transmits the Ack to the AP 2.

### <Fourth example of data sequence>

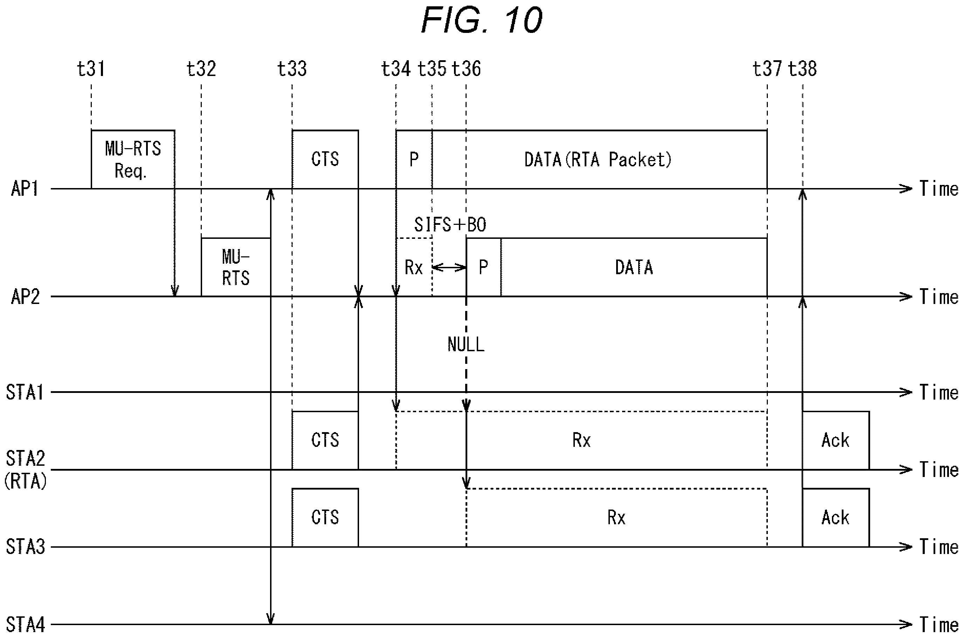

Fig. 10 is a diagram illustrating a fourth example of the data sequence of the Data Tx Phase in the first embodiment.

Fig. 10 illustrates an example in which the AP 2 employs a method of generating Null from the Preamble (Precoded Preamble) for the STA 2. In this case, unlike Figs. 7 to 9, the AP 2 can suppress interference from the Preamble to the STA 2.

However, on the other hand, by applying the beam control from the Preamble, there is a concern that a hidden terminal that cannot detect a signal from the AP 2 may occur.

Accordingly, in a case where the AP 1 attains the TXOP and requests the AP 2 to transmit the Precoded Preamble, the AP 1 transmits a Multi User (MU)-Request To Send (RTS) request signal which is a transmission request signal requesting transmission of the MU-RTS at time t31. The MU-RTS is a transmission priority request signal requesting a transmission priority.

Upon receiving the request from the AP 1, the AP 2 transmits the MU-RTS to at least the AP 1 and the STAs 1 to 4 at time t32. At time t33, the AP 1, the STA 2, and the STA 3 return a clear to send (CTS) to the AP 2.

Since the MU-RTS and the CTS are transmitted in all directions, it is possible to control the transmission suppression until the end of the data transmission by causing the surrounding terminals to set the NAV (Network Allocation Vector, transmission prohibition period). This makes it possible to avoid an increase in the number of hidden terminals due to the Precoded Preamble.

At time t34, the AP 1 starts transmitting a data frame including the data signal of the RTA packet to the STA 2. At time t35 after completing the transmission of the Preamble in the data frame, the AP 1 starts data transmission after the Preamble to the STA 2.

At time t36 when the time of SIFS + BO has elapsed from the time t35, the AP 2 performs control to generate Null for the STA 2 by the beam control from the transmission of the Preamble.

At time t37, the AP 1 and the AP 2 end the data transmission.

At time t38, the STA 2 transmits the Ack to the AP 1, and the STA 3 transmits the Ack to the AP 2.

Note that, since the AP 1 cannot know the STA that the AP 2 wants to transmit at the time of attaining the TXOP, the AP 1 requests the AP 2 to transmit the MU-RTS, but if the AP 1 can acquire the information of the destination of the AP 2 in advance, the AP 1 may directly transmit the MU-RTS.

### <Fifth example of data sequence>

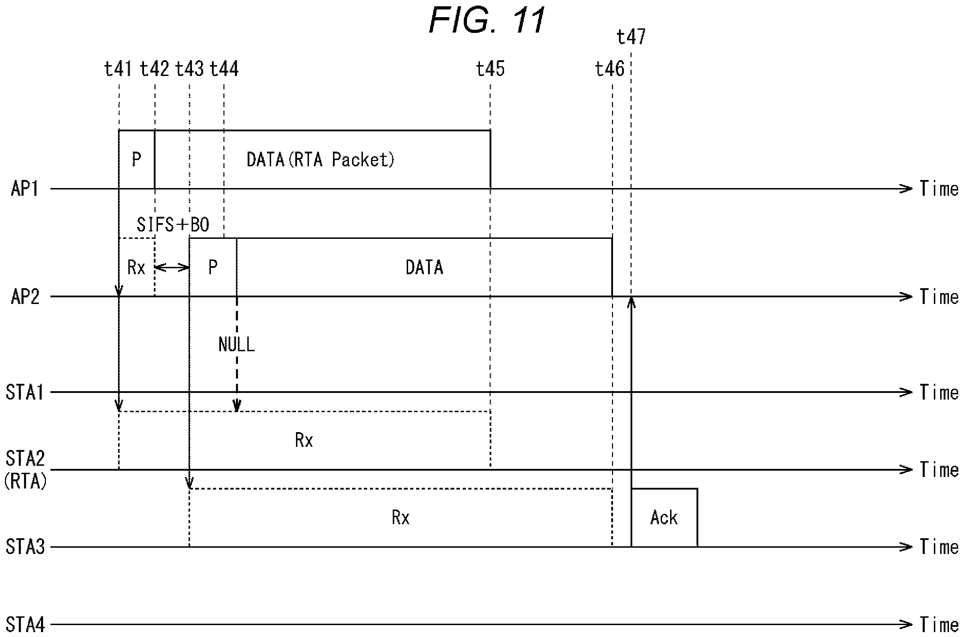

Fig. 11 is a diagram illustrating a fifth example of the data sequence of the Data Tx Phase in the first embodiment.

Fig. 11 illustrates an example in which the AP 1 does not receive the Ack from the STA 2 by setting the Ack Policy in the RTA Info field of the Preamble/EHT-SIG-A to "No Ack".

For example, the AP 1 attains the TXOP, and at time t41, the AP 1 starts to transmit the data frame including the data signal of the RTA packet to the STA 2.

After receiving the Preamble in the data frame transmitted from the AP 1, the AP 2 acquires information regarding the AP 1 from the received Preamble at time t42.

At time t43 when the time of SIFS + BO has elapsed from the time t42, the AP 2 starts data transmission to the STA 3 on the basis of the acquired information regarding the AP 1. At time t44 after completion of transmission of the Preamble in the data frame, the AP 2 employs a method of generating Null for the STA 2 and starts data transmission after the Preamble to the STA 3.

At time t45, the AP 1 ends the data transmission.

At time t46, the AP 2 ends the data transmission. At time t47, the STA 3 transmits the Ack to the AP 2.

That is, when the AP 1 transmits the RTA packet to the STA 1, that is, transmits a packet that does not make sense unless it is transmitted within a certain delay time, it is considered that there is no margin for retransmission even if the data transmission fails.

In such a case, for example, the AP 1 operates not to acquire the Ack from the STA 2, to erase the RTA packet from the transmission buffer together with the end of the data transmission, and not to perform retransmission. Thus, the AP 2 does not need to consider the collision of the Acks, and thus the operation of matching the end time of the data transmission as described above in Fig. 7 is not necessary.

Therefore, for example, as described above, the AP 2 can continue its own data transmission even after the end of the data transmission of the AP 1.

### <Configuration example of wireless communication device>

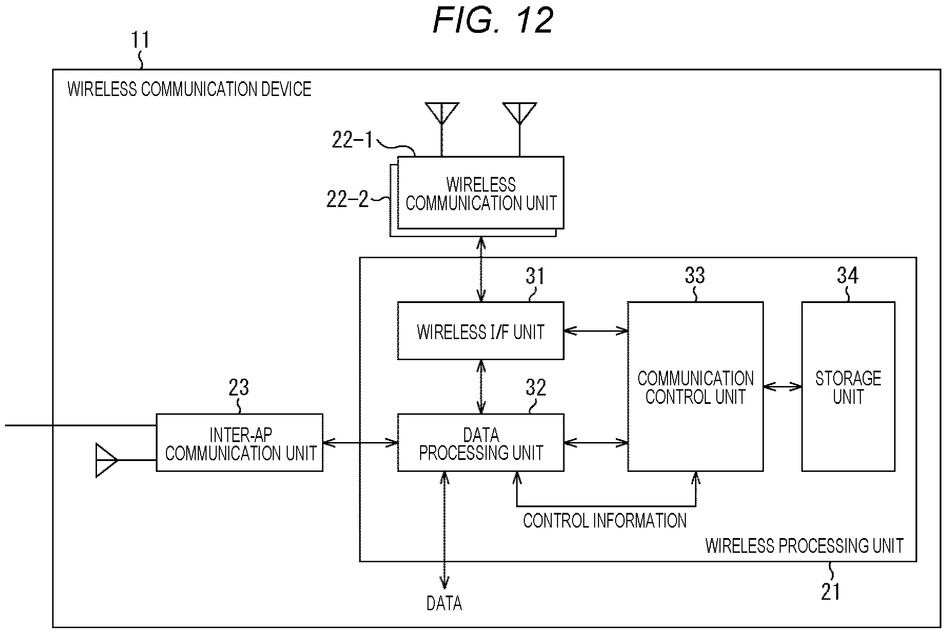

Fig. 12 is a block diagram illustrating a configuration example of a wireless communication device.

The wireless communication device 11 illustrated in Fig. 12 is a device that operates as an AP.

The wireless communication device 11 includes a wireless processing unit 21, wireless communication units 22-1 and 22-2, and an inter-AP communication unit 23.

The wireless processing unit 21 controls communication with the AP and communication with the STA.

The wireless processing unit 21 includes a wireless interface (I/F) unit 31, a data processing unit 32, a communication control unit 33, and a storage unit 34.

The wireless I/F unit 31 performs analog conversion on the transmission signal generated by the data processing unit 32 and converts the transmission signal from a digital signal to an analog signal. Furthermore, the wireless I/F unit 31 performs digital conversion on reception signals acquired by the wireless communication units 22-1 and 22-2, and converts the reception signals from analog signals to digital signals.

The data processing unit 32 generates a transmission signal on the basis of the transmission data and the control information received from the communication control unit 33, and outputs the generated transmission signal to the wireless I/F unit 31.

The data processing unit 32 performs processing of demodulating the reception signal converted by the wireless I/F unit 31 and extracting the reception data and the control information. The data processing unit 32 outputs the extracted control information to the communication control unit 33, and outputs the extracted reception data to an upper layer which is not illustrated.

Furthermore, the data processing unit 32 receives the control information and data supplied from the inter-AP communication unit 23, and outputs the control information and data to the communication control unit 33.

The communication control unit 33 includes a central processing unit (CPU), a read only memory (ROM), a random access memory (RAM), and the like. The communication control unit 33 executes a program stored in the ROM or the like and controls the overall operation of the wireless communication device 11. The communication control unit 33 performs processing of generating the control information notification of which is to be provided to another AP or STA and delivering the control information to the data processing unit 32.

For example, in a case of operating as the AP 1, the communication control unit 33 determines whether or not the Precoded Preamble is requested to the AP 2 after the attainment of the TXOP, and performs control to transmit the above-described MU-RTS request signal or start data transmission including RTA data on the basis of a determination result.

For example, in a case where the communication control unit 33 operates as the AP 2, on the basis of a determination result as to whether the received signal is the MU-RTS request signal or the data signal, the communication control unit performs control to transmit the MU-RTS or generate Null as necessary, and wait for or start data transmission.

The wireless communication units 22-1 and 22-2 each include an antenna, and perform wireless communication with the STA on the basis of the communication resource set by the communication control unit 33 or the like. The wireless communication units 22-1 and 22-2 are referred to as wireless communication units 22 in a case where it is not particularly necessary to distinguish them. Note that the wireless communication unit 22 is not limited to two, and includes a plurality of (n > 1) wireless communication units 22-1 to 22-n.

The wireless communication unit 22 performs RF processing on the wireless signal supplied from the antenna, generates a reception signal, and outputs the reception signal to the wireless I/F unit 31.

The wireless communication unit 22 performs RF processing on the transmission signal supplied from the wireless I/F unit 31 to generate a wireless signal. The wireless communication unit 22 outputs the generated wireless signal to the antenna.

Note that the electromagnetic wave received by the antenna is output to the wireless communication unit 22 as a wireless signal. Furthermore, the antenna emits a wireless signal generated by the wireless communication unit 22 as an electromagnetic wave.

The inter-AP communication unit 23 performs notification processing or acquisition processing of control information and data necessary for coordination between APs. The inter-AP communication unit 23 includes at least one of a wired cable insertion port or an antenna, and communication between APs may be wired or wireless. In a case where communication between APs is wireless, the wireless communication unit 22 may be configured such that the function of the inter-AP communication unit 23 is performed by the wireless communication unit 22. Furthermore, the control information that needs to be transmitted to both the AP and the STA is subjected to communication processing via the wireless communication unit 22.

Note that Fig. 12 illustrates an example in which the wireless processing unit 21 is configured as one IC, but the IC configuration of the present technology is not limited thereto. For example, the wireless I/F unit 31 may be mounted as another IC.

Furthermore, since the configuration of the wireless communication terminal 12 of Fig. 1 is a configuration obtained by removing the inter-AP communication unit 23 from the configuration of the wireless communication device 11 of Fig. 12, the configuration of the wireless communication device 11 of Fig. 12 is also used as the configuration of the wireless communication terminal 12.

### <Processing of AP 1 in first embodiment>

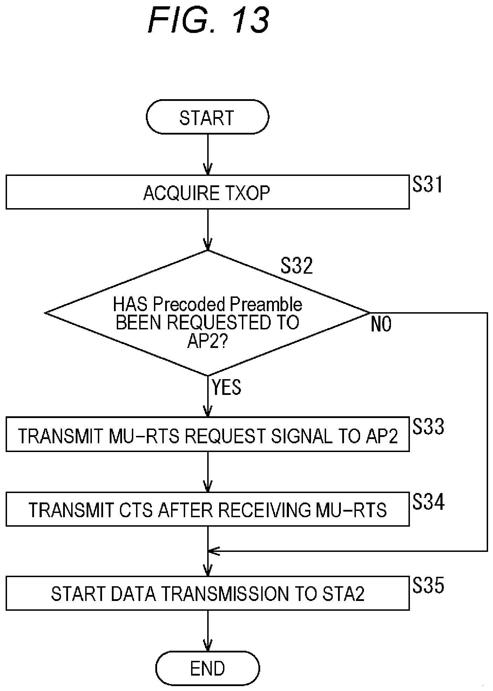

Fig. 13 is a flowchart illustrating processing in the first embodiment of the wireless communication device 11-1 operating as the AP 1.

In step S31, the communication control unit 33 of the wireless communication device 11-1 attains the TXOP by Back Off or the like.

In step S32, the communication control unit 33 determines whether or not the Precoded Preamble, that is, the interference suppression from the Preamble has been requested to the AP 2. In a case where it is determined in step S32 that the Precoded Preamble has been requested to the AP 2, the processing proceeds to step S33 (Fig. 10) .

In step S33, the wireless communication unit 22 transmits the MU-RTS request signal requesting the MU-RTS to the AP 2.

Correspondingly, the AP 2 transmits the MU-RTS.

In step S34, after receiving the MU-RTS transmitted from the AP 2, the wireless communication unit 22 transmits the CTS to the AP 2.

In a case where it is determined in step S32 that the Precoded Preamble is not requested to the AP 2, steps S33 and S34 are skipped, and the processing proceeds to step S35 (Figs. 7 to 9 and 11).

In step S35, the wireless communication unit 22 starts data transmission to the STA 2.

### <Processing of AP 2 in first embodiment>

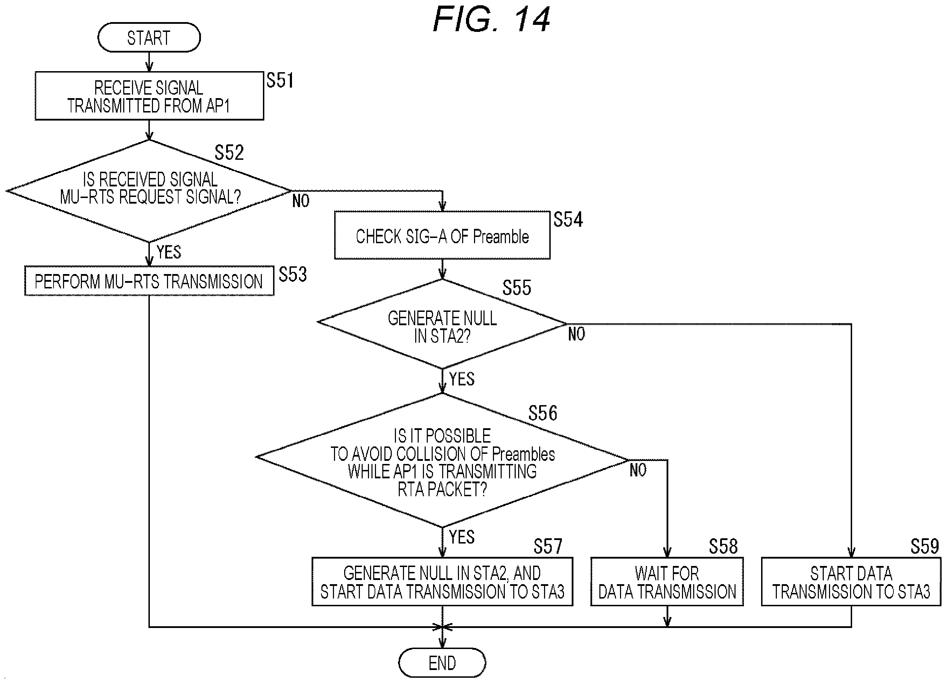

Fig. 14 is a flowchart illustrating processing in the first embodiment of the wireless communication device 11-2 operating as the AP 2.

In step S51, the wireless communication unit 22 of the wireless communication device 11-2 receives a signal transmitted from the AP 1.

In step S52, the communication control unit 33 determines whether or not the signal received by the wireless communication unit 22 is the MU-RTS request signal. In a case where it is determined in step S52 that the signal received by the wireless communication unit 22 is the MU-RTS request signal, the processing proceeds to step S53.

In step S53, the wireless communication unit 22 transmits the MU-RTS. As described above with reference to Fig. 10, at least the AP 1, the transmission destination (STA 2) of the AP 1, and the transmission destination (STA 3) of the AP 2 are included as the destination of the MU-RTS. Note that the transmission destination information of the AP 1 is included in the MU-RTS request signal.

For example, in a case where the signal received by the wireless communication unit 22 is the data signal and it is determined in step S52 that the signal received by the wireless communication unit 22 is not the MU-RTS request signal, the processing proceeds to step S54.

In step S54, the communication control unit 33 checks SIG-A of the Preamble from the received signal.

In step S55, the communication control unit 33 determines whether or not to generate Null in the STA 2 that is the transmission destination of the AP 1 on the basis of the SIG-A of the checked Preamble.

As a condition for generating Null, it is essential that at least the receiver STA ID be the same as the STA ID (Coordination STA ID) designated by the AP 1 in the Coordination Request Frame. In addition, the determination may be made in combination with other conditions. For example, in a case where it can be calculated that the interference power given to the STA 2 does not exceed the Allowable Interference level even if the AP 2 transmits to the STA 3 as the transmission destination with the maximum transmission power, the AP 2 may not generate Null in the STA 2. Moreover, in a case where the RTA flag in the RTA Info of the Preamble is "0", the AP 2 may not generate Null in the STA 2.

In step S55, in a case where it is determined to generate Null in the STA 2, the processing proceeds to step S56.

In step S56, the communication control unit 33 determines whether or not it is possible to avoid a collision of Preambles while the AP 1 is transmitting the RTA packet.

In step S56, in a case of any of the following (1) to (3), it is determined that it is possible to avoid the collision of the Preambles.

(1) Case where the Precoded Preamble field of the Preamble/EHT-SIG-A in the Coordination Request Element obtained before (or the currently received data signal) is "0" (that is, the Preamble does not request to perform the interference suppression) (Fig. 10).
(2) Case where, from the RTA field of the Preamble/EHT-SIG-A of the currently received data frame, the Preamble transmitted by itself does not overlap with the RTA packet transmission of the AP 1 (Fig. 9).
(3) Case where interference suppression is performed only by transmission power control (Fig. 7)

In a case where it is determined in step S56 that it is possible to avoid the collision of the Preambles, the processing proceeds to step S57.

In step S57, the communication control unit 33 generates Null in the STA 2, and the wireless communication unit 22 causes the STA 3 to start data transmission.

In a case where it is determined in step S56 that it is not possible to avoid the collision of the Preambles, the processing proceeds to step S58. In step S58, the communication control unit 33 sets the NAV and waits for the data transmission until the data transmission of the AP 1 is completed.

In a case where it is determined in step S54 that Null is not to be generated in the STA 2, the processing proceeds to step S59.

In step S59, the wireless communication unit 22 starts data transmission to the STA 3.

After steps S53 and S57 to S59, the processing of Fig. 14 ends.

### <3. Second embodiment (example in which AP 2 first attains transmission right)>

Next, as a second embodiment, an example in which the AP 2 first attains the transmission right will be described.

### <Example of overall processing sequence>

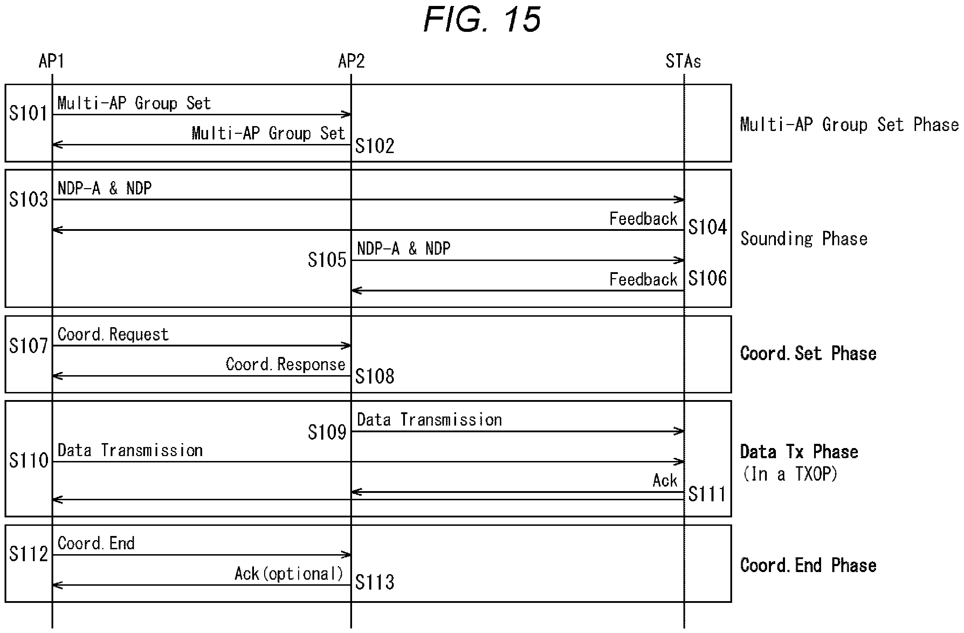

Fig. 15 is a diagram illustrating a sequence for describing the overall processing of the wireless communication system in the second embodiment.

The processing of the wireless communication system illustrated in Fig. 15 is divided into five phases of the Multi-AP Group Set Phase, the Sounding Phase, the Coordination Set Phase, the Data Tx Phase, and the Coordination End Phase, similarly to Fig. 2.

Steps S101 and S102 are the Multi-AP Group Set Phase similar to steps S1 and S2 in Fig. 2. Steps S103 to S106 are the Sounding Phase similar to steps S3 to S6 in Fig. 2. Steps S107 and S108 are the Coordination Set Phase similar to steps S7 and S8 in Fig. 2.

Steps S109 to Sill are the Data Tx Phase, but the order of data transmission is different from steps S9 to S11 in Fig. 2. Steps S112 and S113 are the Coordination End Phase similar to steps S12 and S13 in Fig. 2.

That is, steps S101 to S108, and S112 and S113 in Fig. 15 perform similar processing to steps S1 to S8, and S12 and S13 in Fig. 2, and thus the description thereof will be omitted.

Describing only the Data Tx Phase different from Fig. 2, in step S109, the AP 2 performs Data Transmission to the STA 3. In step S110, the AP 1 performs data transmission to the STA 2. In step S111, the STA 3 transmits the Ack to the AP 2, and the STA 2 transmits the Ack to the AP 1.

### <First example of data sequence>

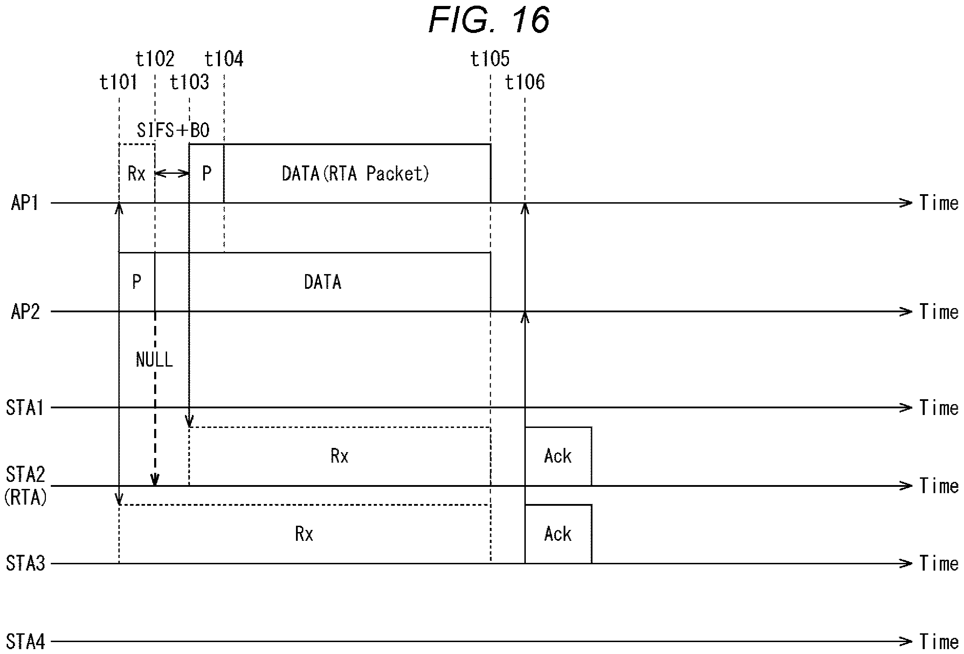

Fig. 16 is a diagram illustrating a first example of a data sequence of the Data Tx Phase in the second embodiment.

Fig. 16 illustrates an example in which the AP 2 generates Null for the STA 2 and transmits a data signal to the STA 3, and the AP 1 transmits a data signal including an RTA packet without generating Null for the STA 2.

Note that, in Fig. 16, portions corresponding to those in Fig. 7 are repeated, and thus the description thereof will be appropriately omitted.

The AP 2 attains the TXOP and starts transmitting the data frame to the STA 3 at time t101. At time t102 after completion of transmission of the Preamble in the data frame, the AP 2 employs a method of generating Null for the STA 2 and starts data transmission after the Preamble for the STA 3.

After receiving the Preamble transmitted from the AP 2, the AP 1 acquires information regarding the AP 2 similar to the information regarding the AP 1 in the case of Fig. 7 from the received Preamble at time t102. At time t103 when the time of SIFS + BO has elapsed from time t102, the AP 1 starts data transmission including the RTA data to the STA 2 on the basis of the acquired information regarding the AP 2. At time t104 after completion of transmission of the Preamble in the data signal, the AP 1 starts data transmission after the Preamble to the STA 3.

At time t105, the AP 1 and the AP 2 end the data transmission.

At time t106, the STA 2 transmits the Ack to the AP 1, and the STA 3 transmits the Ack to the AP 2.

### <Second example of data sequence>

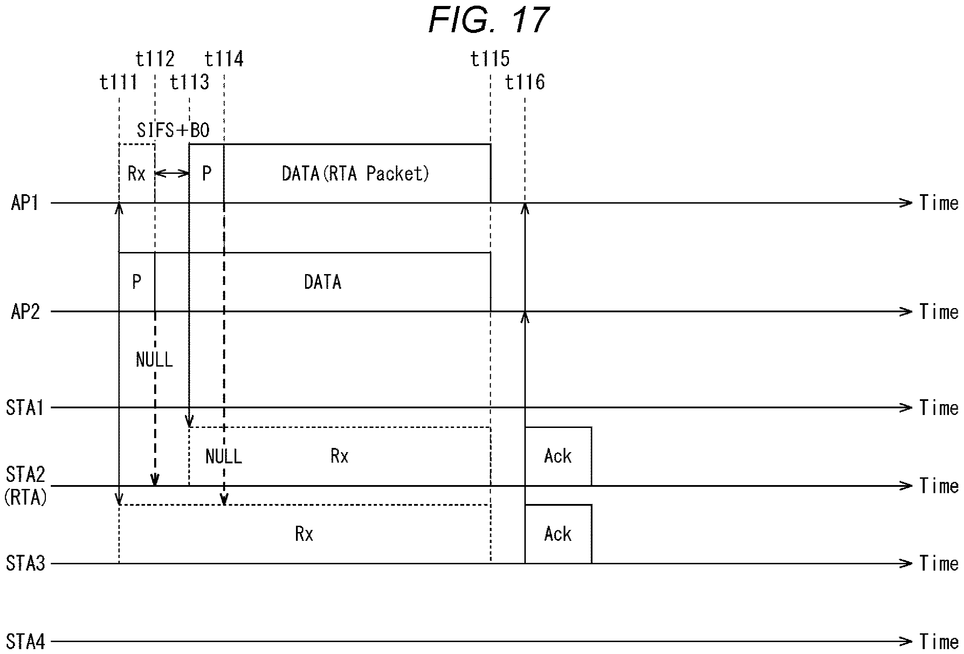

Fig. 17 is a diagram illustrating a second example of the data sequence of the Data Tx Phase in the second embodiment.

Similarly to Fig. 8, Fig. 17 illustrates an example in which the AP 2 generates Null for the STA 2 and the AP 1 generates Null for the STA 3.

Note that, in Fig. 17, portions corresponding to those in Fig. 8 are repeated, and thus the description thereof will be appropriately omitted.

The AP 2 attains the TXOP and starts transmitting the data frame to the STA 3 at time till. At time t102 after completion of transmission of the Preamble in the data frame, the AP 2 employs a method of generating Null for the STA 2 and starts data transmission after the Preamble to the STA 3.

After receiving the Preamble transmitted from the AP 2, the AP 1 acquires information regarding the AP 2 from the received Preamble at time t112. At time t113 when the time of SIFS + BO has elapsed from the time t112, the AP 1 starts data transmission including the RTA data to the STA 2 on the basis of the acquired information regarding the AP 2. At time t114 after completion of transmission of the Preamble of the data signal, the AP 1 employs a method of generating Null for the STA 3 and starts data transmission after the Preamble to the STA 2.

At time t115, the AP 1 and the AP 2 end the data transmission.

At time t116, the STA 2 transmits the Ack to the AP 1, and the STA 3 transmits the Ack to the AP 2.

### <Third example of data sequence>

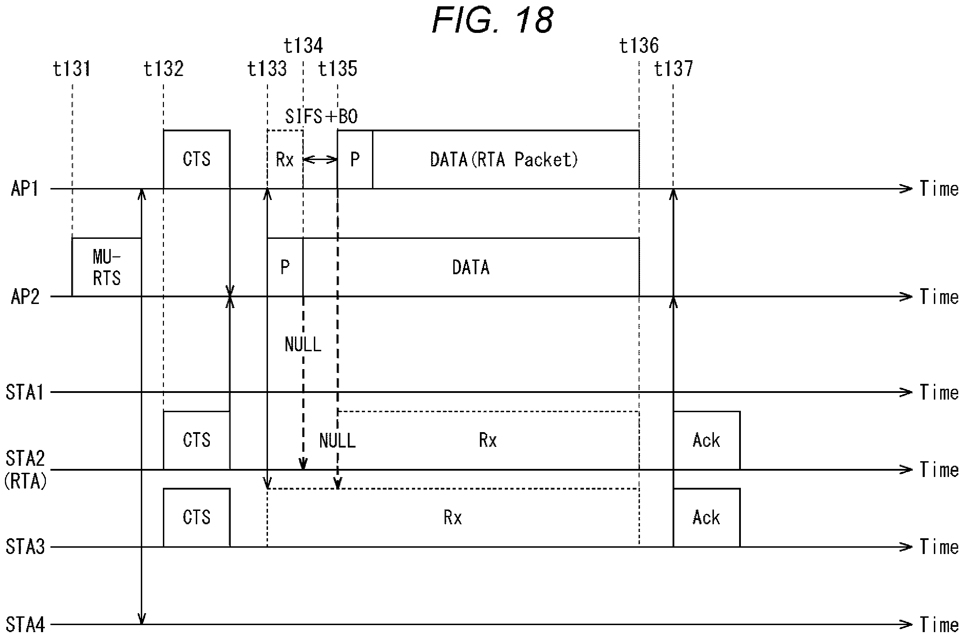

Fig. 18 is a diagram illustrating a third example of the data sequence of the Data Tx Phase in the second embodiment.

Fig. 18 illustrates an example in which the AP 1 employs the method of generating Null (Precoded Preamble) for the STA 3 by the beam control. In this case, unlike Figs. 16 and 17, the AP 1 can suppress interference from the Preamble to the STA 3.

However, on the other hand, when the beam control is applied from the Preamble, there is a concern that a hidden terminal that cannot detect a signal from the AP 1 may occur.

Accordingly, in a case where the AP 2 attains the TXOP and requests the AP 1 to transmit the Precoded Preamble, the AP 2 transmits the MU-RTS to the AP 1 and the STA 1 to the STA 4 at time t131.

Note that, in Fig. 18, portions corresponding to those in Fig. 10 are repeated, and thus the description thereof will be appropriately omitted.

At time t132, the AP 1, the STA 2, and the STA 3 return the CTS to the AP 2.

At time t133, the AP 2 starts transmitting the data frame to the STA 3. At time t134 after completion of transmission of the Preamble in the data frame, the AP 2 employs the method of generating Null for the STA 2 and starts data transmission after the Preamble to the STA 3.

After receiving the Preamble transmitted from the AP 2, the AP 1 acquires information regarding the AP 2 from the received Preamble at time t134. At time t135 when the time of SIFS + BO has elapsed from the time t134, the AP 1 employs the method of generating Null for the STA 3 on the basis of the acquired information regarding the AP 2, and starts data transmission including the RTA data to the STA 2.

At time t136, the AP 1 and the AP 2 end the data transmission.

At time t137, the STA 2 transmits the Ack to the AP 1, and the STA 3 transmits the Ack to the AP 2.

### <Fourth example of data sequence>

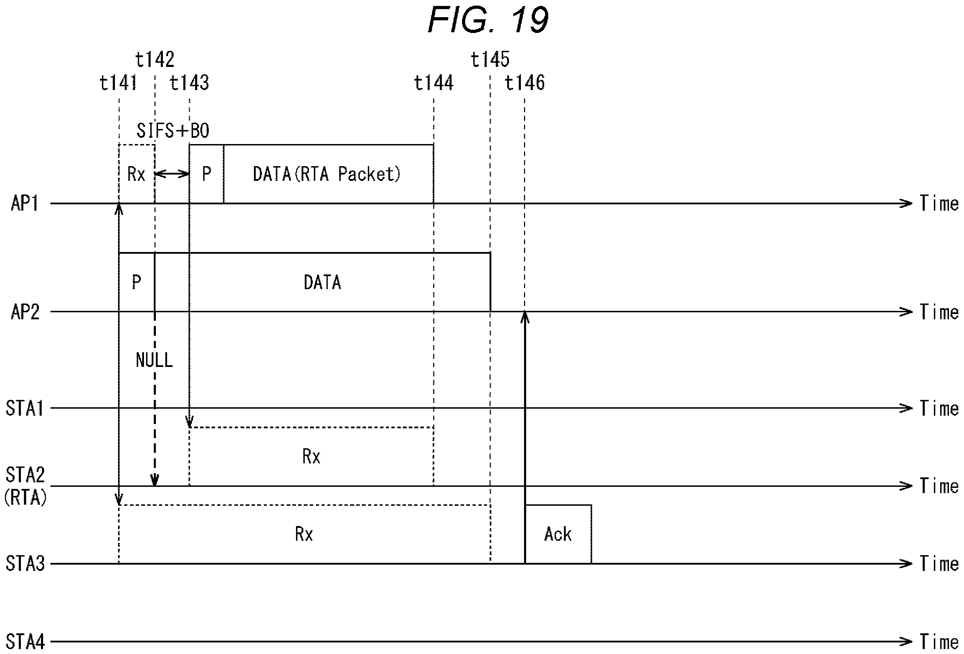

Fig. 19 is a diagram illustrating a fourth example of the data sequence of the Data Tx Phase in the second embodiment.

Fig. 19 illustrates an example in which, similarly to Fig. 11, the AP 1 does not receive the Ack from the STA 2 by setting the Ack Policy in the RTA Info field of the Preamble/EHT-SIG-A to "No Ack".

Note that, in Fig. 19, portions corresponding to those in Fig. 11 are repeated, and thus the description thereof will be appropriately omitted.

For example, the AP 2 attains the TXOP, and at time t141, the AP 2 starts to transmit the data frame to the STA 3. At time t142 after completion of transmission of the Preamble in the data frame, the AP 2 employs a method of generating Null for the STA 2 and starts data transmission after the Preamble for the STA 3.

After receiving the Preamble signal transmitted from the AP 2, the AP 1 acquires information regarding the AP 2 from the received Preamble at time t142.

At time t143 when the time of SIFS + BO has elapsed from the time t142, the AP 1 starts data transmission including the RTA packet to the STA 2 on the basis of the acquired information regarding the AP 2.

At time t144, the AP 1 ends the data transmission.

At time t145, the AP 2 ends the data transmission. At time t146, the STA 3 transmits Ack to the AP 2.

That is, when the AP 1 transmits the RTA packet to the STA 1, that is, transmits a packet that does not make sense unless it is transmitted within a certain delay time, it is considered that there is no margin for retransmission even if the data transmission fails.

In such a case, for example, the AP 1 operates not to acquire the Ack from the STA 2, to erase the RTA packet from the transmission buffer together with the end of the data transmission, and not to perform retransmission. That is, since the AP 2 does not need to consider the collision of the Ack, the operation of adjusting the end time of the data transmission is not necessary as in the case of Fig. 11.

Therefore, for example, as described above, the AP 2 can continue its own data transmission even after the end of the data transmission of the AP 1.

### <Processing of AP 2 of second embodiment>

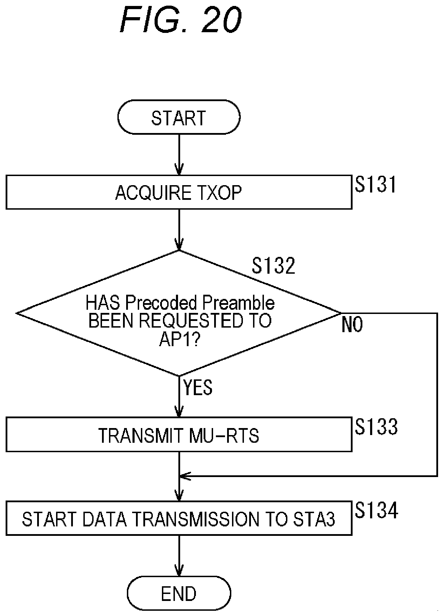

Fig. 20 is a flowchart illustrating processing in the second embodiment of the wireless communication device 11-2 operating as the AP 2.

In step S131, the communication control unit 33 of the wireless communication device 11-2 attains the TXOP by Back Off or the like.

In step S132, the communication control unit 33 determines whether or not the Precoded Preamble has been requested to the AP 1. In a case where it is determined in step S32 that the Precoded Preamble has been requested to the AP 1, the processing proceeds to step S133 (Fig. 18) .

In step S133, the wireless communication unit 22 transmits the MU-RTS to at least the AP 1, the STA 2, and the STA 3.

In response to this, the AP 1 transmits the CTS. After the wireless communication unit 22 receives the CTS transmitted from the AP 1, the processing proceeds to step S134.

In a case where it is determined in step S132 that the Precoded Preamble is not requested to the AP 1, the processing in step S133 is skipped, and the processing proceeds to step S134.

In step S134, the wireless communication unit 22 starts data transmission to the STA 3.

### <Processing of AP 1 of second embodiment>

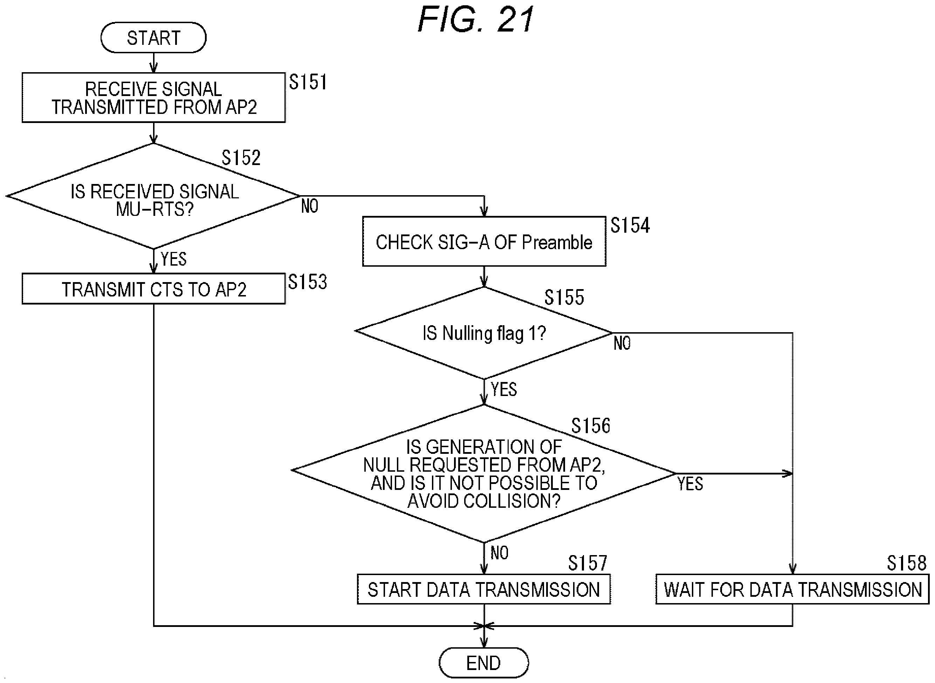

Fig. 21 is a flowchart illustrating processing in the second embodiment of the wireless communication device 11-1 operating as the AP 1.

In step S151, the wireless communication unit 22 of the wireless communication device 11-2 receives a signal transmitted from the AP 1.

In step S152, the communication control unit 33 determines whether or not the signal received by the wireless communication unit 22 is the MU-RTS. In a case where it is determined in step S152 that the signal received by the wireless communication unit 22 is the MU-RTS, the processing proceeds to step S153.

In step S153, the wireless communication unit 22 transmits the CTS to the AP 2 after the SIFS.

For example, in a case where the signal received by the wireless communication unit 22 is the data signal and it is determined in step S152 that the signal received by the wireless communication unit 22 is not the MU-RTS, the processing proceeds to step S154.

In step S154, the communication control unit 33 checks SIG-A of the Preamble from the received signal.

In step S155, the communication control unit 33 determines whether or not the Nulling flag in SIG-A of the checked Preamble is 1. In a case where it is determined in step S155 that the Nulling flag is 1, the processing proceeds to step S156.

In step S156, the communication control unit 33 determines whether generation of Null is requested from the AP 2 and whether collision cannot be avoided. In a case where it is determined in step S156 that generation of Null is not requested from the AP 2 or a collision can be avoided, the processing proceeds to step S157.

In step S157, the wireless communication unit 22 causes the STA 2 to start data transmission.

Furthermore, in a case where it is determined in step S155 that the Nulling flag is 0, or in a case where it is determined in step S156 that generation of Null has been requested from the AP 2 and collision cannot be avoided, the processing proceeds to step S158.

In step S158, the wireless communication unit 22 waits for data transmission to the STA 2.

Note that, in the first embodiment and the second embodiment, the case where the AP transmits data to the STA has been described, but the present technology can also be applied to a case where the STA transmits data to the AP.

### <4. Third embodiment (example of transmission from STA to AP)>

Next, as a third embodiment, a case where an STA transmits an RTA packet and an STA in another cell generates NULL will be described.

### <Example of overall processing sequence>

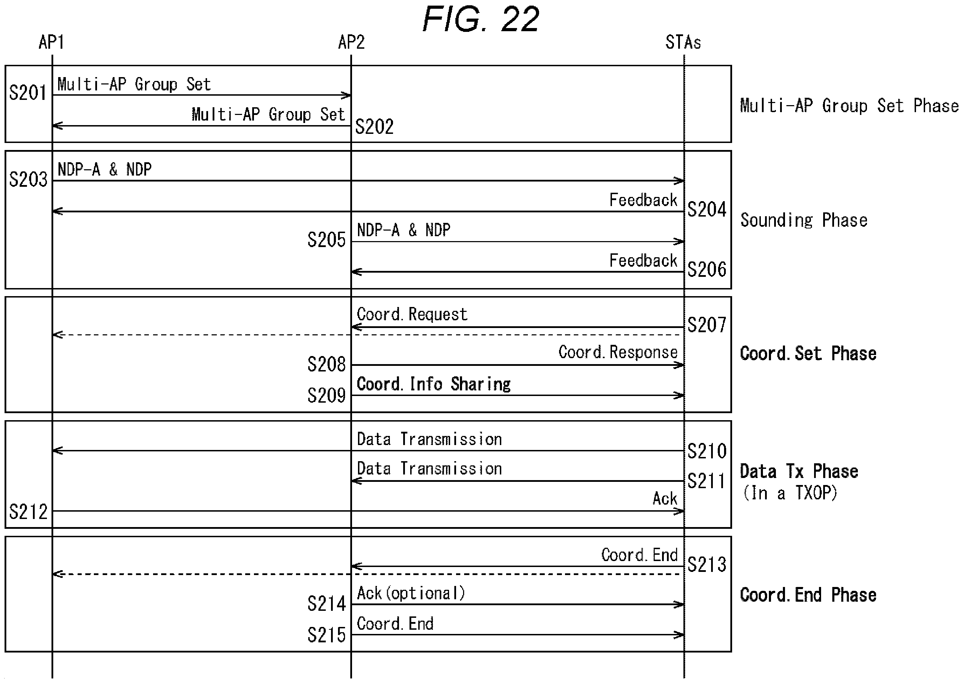

Fig. 22 is a diagram illustrating a sequence for describing the overall processing of the wireless communication system in the third embodiment.

The processing of the wireless communication system illustrated in Fig. 22 is divided into five phases of the Multi-AP Group Set Phase, the Sounding Phase, the Coordination Set Phase, the Data Tx Phase, and the Coordination End Phase, similarly to Fig. 2.

Steps S201 and S202 in Fig. 22 are the Multi-AP Group Set Phase similar to steps S1 and S2 in Fig. 2. Steps S203 to S206 are the Sounding Phase similar to steps S3 to S6 in Fig. 2. Steps S201 to S206 in Fig. 22 perform similar processing to steps S1 to S6 in Fig. 2, and thus the description thereof will be omitted.

That is, steps S207 to S209 are the Coordination Set Phase. In the Coordination Set Phase, the coordinated operation between the AP 1 and the AP 2, that is, setup at the time of starting interference suppression to the STA or the AP of another cell is performed.

For example, in step S207, the STA (in the case of Fig. 22, the STA 2) which desires to start transmission of an RTA packet transmits the Coordination Request Frame to an AP (in the case of Fig. 22, the AP 2) of another cell. In step S208, since the AP 2 transmits the Coordination Response Frame, the STA 2 determines whether or not other cells can coordinate by receiving the Coordination Response Frame.

Note that, in the Coordination Set Phase, even if the STA requests coordination from a plurality of APs, the STA may request coordination from one AP that is most likely to be affected by interference. Furthermore, as indicated by a broken line arrow, this frame exchange may be performed via the AP (AP 1 in Fig. 22) of the connection destination of the same cell.

In a case where the AP 2 has accepted the request for coordination from the STA 2, in step S209, the AP 2 transmits a Coordination Info Sharing Frame, which is a coordination information sharing signal for sharing the coordination information, to the subordinate STAs (the STA 3 and the STA 4 in Fig. 22). In a case where the subordinate STA starts data transmission, the transmission of the Coordination Info Sharing Frame is performed to request the STA 2 to share necessary information or suppress the transmission in order to generate Null.

Note that, in the Coordination Set Phase of Fig. 22, the example has been described in which the other party that transmits the RTA packet and generates NULL generates Null for the STA 2 and transmits the RTA packet, but Null may be generated for the AP 1 and the RTA packet may be transmitted.

Steps S210 to S212 are the Data Tx Phase. In the Data Tx Phase, in the case of Fig. 22, the STA 2 performs data transmission to the AP 1 of the cell to which the STA 2 belongs.

For example, in step S210, the STA 2 performs Data Transmission to the AP 1. In step S211, the STA 3 performs data transmission to the AP 2. At this time, for example, the STA 3 performs the interference suppression on the STA 2 (or AP 1). In step S212, the AP 1 transmits the Ack to the STA 2. Note that, although not illustrated, the AP 2 transmits the Ack to the STA 2.

Steps S213 to S215 are a Coordination End Phase. In the Coordination End Phase, a process of ending the coordinated operation between the AP 1 and the AP 2, that is, the interference suppression to the STA or the AP of another cell is performed.

That is, in step S213, when the transmission of the RTA packet ends, the STA 2 transmits the Coordination End Frame to the AP 2 by a method similar to the Coordination Set Phase, and ends the coordinated operation. That is, as indicated by a broken line arrow, this frame exchange may be performed via the AP (AP 1 in Fig. 22) of the connection destination of the same cell.

In step S214, the AP 2 transmits the Ack to the STA 2. Note that the transmission of the Ack is optional. Furthermore, in step S215, the AP 2 transmits the Coordination End Frame to the subordinate STA, and ends the coordinated operation.

Note that, in step S211 of Fig. 22, the example has been described in which the STA 3 performs Data Transmission to the AP 2, but for example, the AP 2 may perform Data Transmission to the STA 3. At this time, for example, the AP 2 performs the interference suppression on the STA 2 (or AP 1).

### <Configuration example of Coordination Info Sharing Frame>

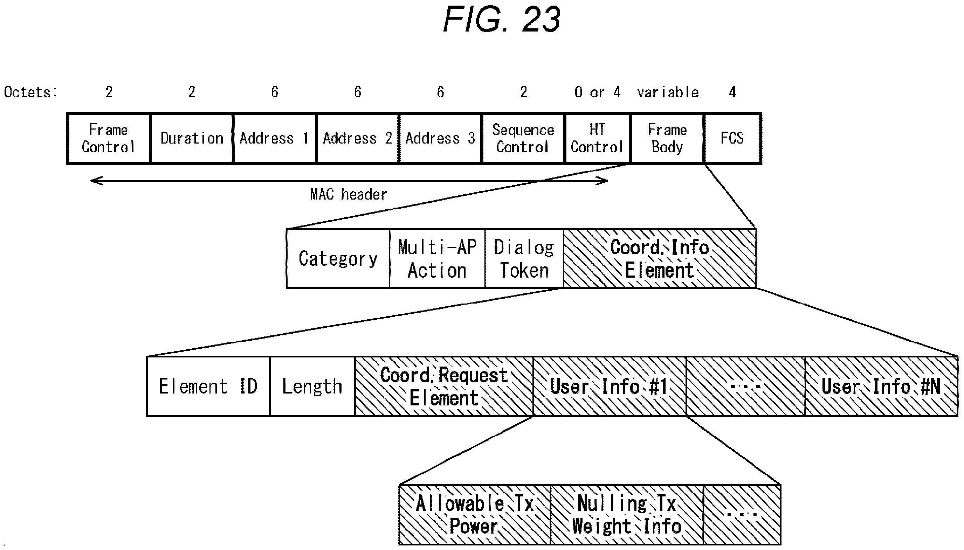

Fig. 23 is a diagram illustrating a configuration example of the Coordination Info Sharing Frame.

The Coordination Info Sharing Frame includes the MAC Header, the Frame Body, and the FCS.

The Frame Body includes fields of Category, Multi-AP Action, Dialog Token, and Coordination Info Element.

In the Category field, a value indicating that this frame is the Action Frame for Multi-AP is set.

In the Multi-AP Action field, a value indicating that this frame is the Coordination Info Sharing Frame is set.

In the Dialog Token field, the same value as the Dialog Token of the Coordination Request Frame in which the processing ends in this frame is set.

In the Coordination Info Element field, information shared for requesting a coordinated operation from the AP to the subordinate STA is set.

The Coordination Info Element field includes fields of Element ID, Length, Coordination Request Element, and User Info #1 to User Info #N.

In the Element ID field, identification information indicating that this frame is the Coordination Info Sharing Frame is set.

In the Length field, information regarding the length of this frame is set.

The Coordination Request Element field includes information related to a party with whom NULL is generated.

Each field of User Info #1 to User Info #N includes Allowable Tx Power and Nulling Tx Weight Info.

The allowable Tx Power is information indicating allowable transmission power for each subordinate STA.

Nulling Tx Weight Info is transmission weight information necessary for the beam control.

Note that, for the transmission weight information necessary for the beam control described above, channel estimation between the STAs in different cells is performed in the Sounding Phase, and the AP needs to acquire feedback information.

Furthermore, for example, the present invention is not limited to the example of Fig. 23, and transmission suppression of the corresponding STA may be performed by providing another field, setting a specific value to the Allowable Tx Power field, or the like.

In a case where the STA that has attained this frame attains the TXOP and starts data transmission, the STA performs transmission power equal to or less than the value of the allowable transmission power notification of which is provided or transmission weight processing, and starts data transmission. If the AP provides notification to perform transmission suppression, the corresponding STA sets the NAV and waits for transmission.

Note that, in Fig. 23, the Coordination Info Sharing Frame is described as a part of the Action Frame defined in IEEE 802.11, but the configuration example of the frame is not limited to the example in Fig. 23. For example, the frame may be configured by the Management Frame or the Control Frame including fields equivalent to the information specified by the Coordination Info Element or this Element.

### <5. Others>

Note that, in the present embodiment, the standby time of the subsequent AP has been described as SIFS + BO, but this is because an operation of random standby time by BO is assumed so that collision of data transmission does not occur even in a case where the number of APs is three or more.

If there are only two APs, or if the AP that performs the transmission first can specify an AP that can be subsequently transmitted in the MU-RTS Trigger/MU-RTS Frame or the like in the Preamble of the data signal, the AP that performs the subsequent transmission does not need BO, and may wait for the SIFS to start data transmission.

### <Effects of present technology>

As described above, in the first present technology, the first data frame including the first data signal is transmitted to the STA 2 (wireless terminal) by the AP 1 (wireless communication device). Then, before transmission of the first data frame, transmission of the suppression request signal requesting the AP 2 (another wireless communication device) to perform the interference suppression on the STA 2 is controlled.

Thus, in the AP 1, it is possible to reduce the transmission delay of data that requires at least one of low delay or high reliability.

Furthermore, in the second present technology, the suppression request signal requesting the interference suppression on the first wireless terminal that has been transmitted from the AP 1 (another wireless communication device), which transmits the first data frame including the first data signal to the STA 2 (first wireless terminal), before the transmission of the first data frame is received by the AP 2 (wireless communication device). Then, it is determined whether or not to perform the interference suppression on the basis of the suppression request signal.

Thus, in the AP 2, it is possible to minimize a decrease in transmission power and a decrease in transmission quality due to a decrease in antenna flexibility.

In the third present technology, a data frame including a data signal is transmitted from the STA 2 (wireless communication terminal) to the AP 1 (first wireless communication device). Then, before the data frame is transmitted, transmission of the suppression request signal requesting the AP 2 (second wireless communication device) to perform the interference suppression is controlled.

In the fourth present technology, the interference request signal requesting the interference suppression is received by the AP 2 (wireless communication device) from the STA 2 (first wireless communication terminal) that transmits the first data frame including the first data signal, and whether or not the STA 2 performs the interference suppression on the AP 1 (another wireless communication device) that transmits the first data frame is determined on the basis of the interference request signal when the second data frame different from the first data frame is transmitted to the second wireless communication terminal.

In the fifth present technology, the STA 3 (wireless communication terminal) receives, from the AP 2 (wireless communication device), a coordination information sharing signal that shares a request for the interference suppression with the STA 2 (another wireless communication terminal) that transmits the first data frame including the first data signal. Then, at the time of transmission of the second data frame different from the first data frame to the AP 2, whether or not to perform the interference suppression on the AP 1 (another wireless communication device) to which the STA 2 transmits the first data frame is determined on the basis of the coordination information sharing signal.

As described above, even in a case where the STA 2 performs data transmission, the transmission delay of data can be reduced.

### <Configuration example of computer>

The series of processes described above can be executed by hardware or can be executed by software. In a case where the series of processes is executed by software, a program constituting the software is installed on a computer built into dedicated hardware or a general-purpose personal computer from a program recording medium, or the like.

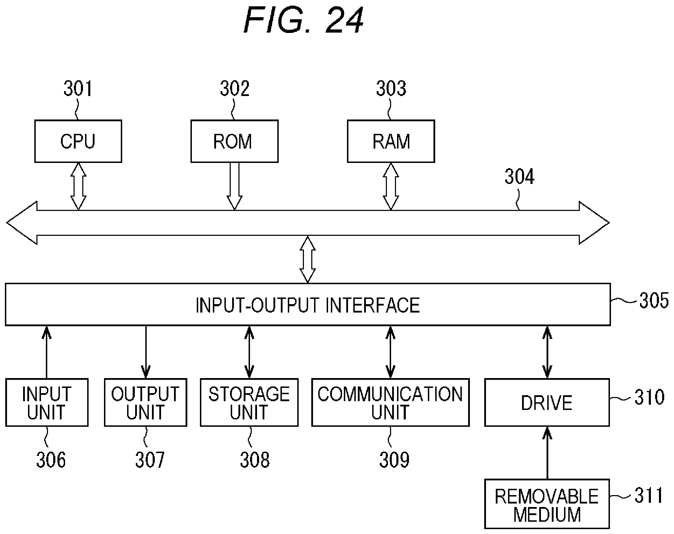

Fig. 24 is a block diagram illustrating a configuration example of hardware of a computer that executes the above-described series of processes by a program.

A central processing unit (CPU) 301, a read only memory (ROM) 302, and a random access memory (RAM) 303 are mutually connected by a bus 304.

An input-output interface 305 is further connected to the bus 304. An input unit 306 including a keyboard, a mouse, and the like, and an output unit 307 including a display, a speaker, and the like are connected to the input-output interface 305. Furthermore, a storage unit 308 including a hard disk, a nonvolatile memory, or the like, a communication unit 309 including a network interface or the like, and a drive 310 that drives a removable medium 311 are connected to the input-output interface 305.

In the computer configured as described above, for example, the CPU 301 loads a program stored in the storage unit 308 into the RAM 303 via the input-output interface 305 and the bus 304 and executes the program, to thereby perform the above-described series of processes.

The program to be executed by the CPU 301 is provided, for example, by being recorded in the removable medium 311 or via a wired or wireless transmission medium such as a local area network, the Internet, or digital broadcasting, and is installed in the storage unit 308.

Note that the program executed by the computer may be a program for processing in time series in the order described in the present description, or a program for processing in parallel or at a necessary timing such as when a call is made.

Note that in the present description, a system means a set of a plurality of components (devices, modules (parts), and the like), and it does not matter whether or not all the components are in the same housing. Therefore, both of a plurality of devices housed in separate housings and connected via a network and a single device in which a plurality of modules is housed in one housing are systems.

Furthermore, the effects described herein are merely examples and are not limited, and other effects may be provided.

The embodiments of the present technology are not limited to the above-described embodiments, and various modifications are possible without departing from the gist of the present technology.

For example, the present technology can take a configuration of cloud computing in which one function is shared by a plurality of devices via a network and processed jointly.

Furthermore, each step described in the above-described flowcharts can be executed by one device, or can be executed in a shared manner by a plurality of devices.

Moreover, in a case where a plurality of processes is included in one step, the plurality of processes included in the one step can be executed in a shared manner by a plurality of devices in addition to being executed by one device.

### <Example of combinations of configurations>

The present technology can also employ the following configurations.
(1) A wireless communication device, including:
   a wireless communication unit that transmits a first data frame including a first data signal to a wireless terminal;
   a communication control unit that controls transmission of a suppression request signal requesting another wireless communication device to perform interference suppression on the wireless terminal before transmission of the first data frame.
(2) The wireless communication device according to (1) above, in which
   the communication control unit includes, in the suppression request signal, identification information of the wireless terminal, information regarding a transmission time of the first data signal, or information indicating allowable interference power of the wireless terminal.
(3) The wireless communication device according to (1) or (2) above, in which
   the communication control unit includes, in the suppression request signal, information indicating whether or not to perform the interference suppression from a head of a data frame transmitted by the another wireless communication device.
(4) The wireless communication device according to any one of (1) to (3) above, in which
   the wireless communication unit receives a response signal responding to the suppression request signal, and
   the communication control unit determines whether or not to perform the interference suppression on a transmission destination by the another wireless communication device of a second data signal different from the first data signal at a time of transmitting the first data frame on the basis of information of the response signal.
(5) The wireless communication device according to any one of (1) to (4) above, in which
   the communication control unit includes, in the first data frame, identification information of the wireless terminal, presence or absence of the first data signal, and information regarding a transmission time of the first data signal.
(6) The wireless communication device according to any one of (1) to (5) above, in which
   the communication control unit controls transmission of a transmission request signal requesting the another wireless communication device to transmit a priority request signal requesting a transmission priority before transmission of the first data frame.
(7) The wireless communication device according to any one of (1) to (6) above, in which
   the communication control unit determines whether or not to start transmission of the first data frame on the basis of information included in a second data frame different from the first data frame, the second data frame being transmitted from the another wireless communication terminal.
(8) The wireless communication device according to any one of (1) to (7) above, in which
   the communication control unit controls transmission of a notification signal notifying the another wireless communication device of an end of the interference suppression when the transmission of the first data frame is completed.
(9) The wireless communication device according to any one of (1) to (8) above, in which
   the first data signal is data for which at least one of low delay or high reliability is required.
(10) A wireless communication method including, by a wireless communication device:
   transmitting a first data frame including a first data signal to a wireless terminal, and
   controlling transmission of a suppression request signal requesting another wireless communication device to perform interference suppression on the wireless terminal before transmitting the first data frame.
(11) A wireless communication device, including:
   a wireless communication unit that receives a suppression request signal requesting interference suppression on the first wireless terminal, the suppression request signal being transmitted before transmission of a first data frame from another wireless communication device that transmits the first data frame including a first data signal to a first wireless terminal; and
   a communication control unit that determines whether or not to perform the interference suppression on the basis of the suppression request signal.
(12) The wireless communication device according to (11) above, in which
   the communication control unit controls transmission of a response signal including information regarding a possibility and a reason of the possibility of the interference suppression as a response to the suppression request signal.
(13) The wireless communication device according to (11) or (12) above, in which
   the communication control unit generates, as a response to the suppression request signal, a response signal including information requesting the another wireless communication device to perform the interference suppression on a second wireless terminal that is a transmission destination of the communication control unit.
(14) The wireless communication device according to (11) above, in which
   the communication control unit determines whether or not to subsequently start transmission of a second data frame different from the first data frame to a second wireless terminal that is a transmission destination of the communication control unit and whether or not to perform the interference suppression on the first wireless terminal on the basis of identification information of the first wireless terminal included in the first data frame, presence or absence of the first data signal, and information regarding a transmission time of the first data signal.
(15) The wireless communication device according to (11) above, in which
   the communication control unit determines whether or not to perform the interference suppression on the first wireless terminal designated by the suppression request signal when starting transmission of a second data frame different from the first data frame to a second wireless terminal that is a transmission destination by the communication control unit.
(16) The wireless communication device according to any one of (11) to (15) above, in which
   the first data signal is data for which at least one of low delay or high reliability is required.
(17) A wireless communication method including, by a wireless communication device:
   receiving a suppression request signal requesting interference suppression on the first wireless terminal, the suppression request signal being transmitted before transmission of a first data frame from another wireless communication device that transmits the first data frame including a first data signal to a first wireless terminal; and
   determining whether or not to perform the interference suppression on the basis of the suppression request signal.
(18) A wireless communication terminal, including:
   a wireless communication unit that transmits a data frame including a data signal to a first wireless communication device; and
   a communication control unit that controls transmission of a suppression request signal requesting a second wireless communication device to perform interference suppression before transmission of the data frame.
(19) A wireless communication method including, by a wireless communication terminal:
   transmitting a data frame including a data signal to a first wireless communication device, and
   controlling transmission of a suppression request signal requesting a second wireless communication device to perform interference suppression before transmission of the data frame.
(20) A wireless communication device, including:
   a wireless communication unit that receives an interference request signal requesting interference suppression from a first wireless communication terminal that transmits a first data frame including a first data signal; and
   a communication control unit that determines whether or not to perform the interference suppression to another wireless communication device to which the first data frame is transmitted by the first wireless communication terminal on the basis of the interference request signal when a second data frame different from the first data frame is transmitted to a second wireless communication terminal.
(21) A wireless communication method including, by a wireless communication device:
   receiving an interference request signal requesting interference suppression from a first wireless communication terminal that transmits a first data frame including a first data signal; and
   determining whether or not to perform the interference suppression to another wireless communication device to which the first data frame is transmitted by the first wireless communication terminal on the basis of the interference request signal when a second data frame different from the first data frame is transmitted to a second wireless communication terminal.
(22) A wireless communication terminal, including:
   a communication unit that receives, from a wireless communication device, a coordination information sharing signal that shares a request for interference suppression on another wireless communication terminal that transmits a first data frame including a first data signal; and
   a communication control unit that determines whether or not to perform the interference suppression on another wireless communication device to which the another wireless communication terminal transmits the first data frame on the basis of the coordination information sharing signal when a second data frame different from the first data frame is transmitted to the wireless communication device.
(23) A wireless communication method including, by a wireless communication terminal:
   receiving, from a wireless communication device, a coordination information sharing signal that shares a request for interference suppression on another wireless communication terminal that transmits a first data frame including a first data signal; and
   determining whether or not to perform the interference suppression on another wireless communication device to which the another wireless communication terminal transmits the first data frame on the basis of the coordination information sharing signal when a second data frame different from the first data frame is transmitted to the wireless communication device.

### REFERENCE SIGNS LIST

- 11-1, 11-2, 11: Wireless communication device
- 12-1 to 12-4, 12: Wireless communication terminal
- 21: Wireless processing unit
- 22-1, 22-2, 22: Wireless communication unit
- 23: Inter-AP communication unit
- 31: Wireless I/F unit
- 32: Data processing unit
- 33: Communication control unit
- 34: Storage unit

## Claims

1. A wireless communication device, comprising:
a wireless communication unit that transmits a first data frame including a first data signal to a wireless terminal; and
a communication control unit that controls transmission of a suppression request signal requesting another wireless communication device to perform interference suppression on the wireless terminal before transmission of the first data frame.

2. The wireless communication device according to claim 1, wherein
the communication control unit includes, in the suppression request signal, identification information of the wireless terminal, information regarding a transmission time of the first data signal, or information indicating allowable interference power of the wireless terminal.

3. The wireless communication device according to claim 1, wherein
the communication control unit includes, in the suppression request signal, information indicating whether or not to perform the interference suppression from a head of a data frame transmitted by the another wireless communication device.

4. The wireless communication device according to claim 1, wherein
the wireless communication unit receives a response signal responding to the suppression request signal, and
the communication control unit determines whether or not to perform the interference suppression on a transmission destination by the another wireless communication device of a second data signal different from the first data signal at a time of transmitting the first data frame on a basis of information of the response signal.

5. The wireless communication device according to claim 1, wherein
the communication control unit includes, in the first data frame, identification information of the wireless terminal, presence or absence of the first data signal, and information regarding a transmission time of the first data signal.

6. The wireless communication device according to claim 1, wherein
the communication control unit controls transmission of a transmission request signal requesting the another wireless communication device to transmit a priority request signal requesting a transmission priority before transmission of the first data frame.

7. The wireless communication device according to claim 1, wherein
the communication control unit determines whether or not to start transmission of the first data frame on a basis of information included in a second data frame different from the first data frame, the second data frame being transmitted from the another wireless communication terminal.

8. The wireless communication device according to claim 1, wherein
the communication control unit controls transmission of a notification signal notifying the another wireless communication device of an end of the interference suppression when the transmission of the first data frame is completed.

9. The wireless communication device according to claim 1, wherein
the first data signal is data for which at least one of low delay or high reliability is required.

10. A wireless communication device, comprising:
a wireless communication unit that receives a suppression request signal requesting interference suppression on the first wireless terminal, the suppression request signal being transmitted before transmission of a first data frame from another wireless communication device that transmits the first data frame including a first data signal to a first wireless terminal; and
a communication control unit that determines whether or not to perform the interference suppression on a basis of the suppression request signal.

11. The wireless communication device according to claim 10, wherein
the communication control unit controls transmission of a response signal including information regarding a possibility and a reason of the possibility of the interference suppression as a response to the suppression request signal.

12. The wireless communication device according to claim 10, wherein
the communication control unit controls, as a response to the suppression request signal, transmission of a response signal including information requesting the another wireless communication device to perform the interference suppression on a second wireless terminal that is a transmission destination of the communication control unit.

13. The wireless communication device according to claim 10, wherein
the communication control unit determines whether or not to subsequently start transmission of a second data frame different from the first data frame to a second wireless terminal that is a transmission destination of the communication control unit and whether or not to perform the interference suppression on the first wireless terminal on a basis of identification information of the first wireless terminal included in the first data frame, presence or absence of the first data signal, and information regarding a transmission time of the first data signal.

14. The wireless communication device according to claim 10, wherein
the communication control unit determines whether or not to perform the interference suppression on the first wireless terminal designated by the suppression request signal when starting transmission of a second data frame different from the first data frame to a second wireless terminal that is a transmission destination by the communication control unit.

15. The wireless communication device according to claim 10, wherein
the first data signal is data for which at least one of low delay or high reliability is required.

16. A wireless communication terminal, comprising:
a wireless communication unit that transmits a data frame including a data signal to a first wireless communication device; and
a communication control unit that controls transmission of a suppression request signal requesting a second wireless communication device to perform interference suppression before transmission of the data frame.

17. A wireless communication device, comprising:
a wireless communication unit that receives an interference request signal requesting interference suppression from a first wireless communication terminal that transmits a first data frame including a first data signal; and
a communication control unit that determines whether or not to perform the interference suppression to another wireless communication device to which the first data frame is transmitted by the first wireless communication terminal on a basis of the interference request signal when a second data frame different from the first data frame is transmitted to a second wireless communication terminal.

18. A wireless communication terminal, comprising:
a communication unit that receives, from a wireless communication device, a coordination information sharing signal that shares a request for interference suppression on another wireless communication terminal that transmits a first data frame including a first data signal; and
a communication control unit that determines whether or not to perform the interference suppression on another wireless communication device to which the another wireless communication terminal transmits the first data frame on a basis of the coordination information sharing signal when a second data frame different from the first data frame is transmitted to the wireless communication device.
